(19) Europäisches Patentamt
European Patent Office
Office européen des brevets

(11) **EP 4 697 636 A1**

(12) **EUROPEAN PATENT APPLICATION**
published in accordance with Art. 153(4) EPC

(43) Date of publication:
**18.02.2026 Bulletin 2026/08**

(21) Application number: **24814305.9**

(22) Date of filing: **23.05.2024**

(51) International Patent Classification (IPC):
**H04L 5/00** (2006.01)

(52) Cooperative Patent Classification (CPC):
**H04L 5/00**

(86) International application number:
**PCT/CN2024/095013**

(87) International publication number:
**WO 2024/245106 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 CN 202310613789**

(71) Applicant: **Huawei Technologies Co., Ltd.
Shenzhen, Guangdong 518129 (CN)**

(72) Inventors:
• **YANG, Pei
Shenzhen, Guangdong 518129 (CN)**

• **ZHANG, Zhening
Shenzhen, Guangdong 518129 (CN)**
• **GAO, Xiang
Shenzhen, Guangdong 518129 (CN)**
• **YANG, Yubo
Shenzhen, Guangdong 518129 (CN)**
• **YU, Zheng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DMRS BASED COMMUNICATION METHOD AND APPARATUS**

(57)  This application provides a DMRS-based communication method and apparatus. In the method, a network device may configure a terminal to use an enhanced DMRS type, so that the terminal can receive a DMRS by using an OCC corresponding to the enhanced DMRS type, where the OCC is, for example, a sequence with a length of 2 or 4, to avoid a receiving failure due to a case that the terminal does not know whether to use an OCC corresponding to the enhanced DMRS type or an OCC corresponding to a DMRS type 1 or a DMRS type 2, and ensure that the terminal can successfully receive the DMRS.

FIG. 6

## Description

This application claims priority to Chinese Patent Application No. 202310613789.7, filed with the China National Intellectual Property Administration on May 26, 2023 and entitled "DMRS-BASED COMMUNICATION METHOD AND APPARATUS", which is incorporated herein by reference in its entirety.

## TECHNICAL FIELD

This application relates to the communication field, and in particular, to a DMRS-based communication method and apparatus.

## BACKGROUND

In a new radio (new radio, NR) system, based on a manner of mapping a DMRS to a frequency domain resource, there are the following two demodulation reference signal (demodulation reference signal, DMRS) types: a type 1 (configuration type 1) DMRS and a type 2 (configuration type 2) DMRS, where there are a maximum of 12 orthogonal DMRS ports for the type 2 DMRS. In a multiple-input multiple-output (multi-input multi-output, MIMO) topic of Release 18 of the 3rd generation partnership project (3GPP Rel-18), an objective of DMRS enhancement is to increase a quantity of orthogonal DMRS ports from at most 12 to 24 without increasing DMRS overheads. This is also referred to as an enhanced DMRS type.

In this case, how to ensure that a terminal can successfully receive a DMRS is a hot topic in current research.

## SUMMARY

Embodiments of this application provide a DMRS-based communication method and apparatus, to ensure that a terminal can successfully receive a DMRS.

To achieve the foregoing objective, the following technical solutions are used in this application.

According to a first aspect, a demodulation reference signal DMRS-based communication method is provided. The method includes: A terminal receives configuration information from a network device, and receives a DMRS on an antenna port based on a DMRS parameter. The configuration information indicates a configuration type of the DMRS. When the configuration type of the DMRS is an enhanced DMRS type, an orthogonal cover code OCC used for mapping the DMRS to a physical resource is a sequence with a length of 2 or 4. The DMRS parameter includes at least the OCC, and the DMRS parameter is determined based on the configuration information and antenna port information. The antenna port information indicates the antenna port used for downlink information transmission.

It can be learned from the method according to the first aspect that the network device may configure the terminal to use the enhanced DMRS type, so that the terminal can receive the DMRS by using an OCC corresponding to the enhanced DMRS type, where the OCC is, for example, a sequence with a length of 2 or 4, to avoid a receiving failure due to a case that the terminal does not know whether to use an OCC corresponding to the enhanced DMRS type or an OCC corresponding to a DMRS type 1 or a DMRS type 2, and ensure that the terminal can successfully receive the DMRS.

In a possible design scheme, the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

In a possible design scheme, when the antenna port is a first antenna port, the value of k' is {0, 1}; or when the antenna port is a second antenna port, the value of k' is {0, 1, 2, 3}. For example, the first antenna port is an antenna port with a port number of 1000, and the second antenna port is an antenna port with a port number greater than 1000.

It can be understood that, for the DMRS type 1 or the DMRS type 2, a sequence of $w_f(k')$ that has a length of 2 and that corresponds to the antenna port 1000 may be expressed as (+1, +1); and for the enhanced DMRS type, a sequence of $w_f(k')$ that has a length of 4 and that corresponds to the antenna port 1000 may be expressed as (+1, +1, +1, +1). To be specific, the two sequences are orthogonal. Therefore, for the scheduled antenna port 1000, even if the configured enhanced DMRS type indicates that the value of k' may be {0, 1, 2, 3}, the terminal can still normally demodulate the DMRS by using the sequence with a length of 2, and demodulation complexity and overheads can also be reduced. On the contrary, for the antenna port with a port number greater than 1000, the foregoing two sequences are not orthogonal. Therefore, when the configured enhanced DMRS type indicates that the value of k' may be {0, 1, 2, 3}, the terminal can normally demodulate the DMRS only by using the sequence with a length of 4, to avoid a demodulation failure.

In a possible design scheme, when the downlink information transmission is scheduled by downlink control information DCI in a first format, the value of k' is {0, 1}; or when the downlink information transmission is scheduled by DCI in a second format, the value of k' is {0, 1, 2, 3}. For example, the first format is a DCI format 1_0, and the second format is a DCI format 1_1.

It can be understood that, because an antenna port scheduled by the DCI in the first format is usually the antenna port 1000, as described above, even if the configured enhanced DMRS type indicates that the value of k' may be {0, 1, 2, 3}, the terminal can still normally demodulate the DMRS by using the sequence with a length of 2, and demodulation complexity and overheads can also be reduced. On the contrary, because an antenna port scheduled by the DCI in the second format is usually the antenna port with a port number greater than 1000, as described above, when the configured enhanced DMRS type indicates that the value of k' may be {0, 1, 2, 3}, the terminal can normally demodulate the DMRS only by using the sequence with a length of 4, to avoid a demodulation failure.

In a possible design scheme, the method according to the first aspect may further include: The terminal receives indication information from the network device, where the indication information indicates that the value of k' is {0,1,2,3} or {0, 1}.

In a possible design scheme, when no connection is established between the terminal and the network device, the value of k' is {0, 1, 2, 3}. To be specific, even if the terminal does not know whether a network side configures the enhanced DMRS type or configures the DMRS type 1 or the DMRS type 2, the terminal can still determine $w_f(k')$ by assuming, by default, that the value of k' is {0, 1, 2, 3}.

In a possible design scheme, the method according to the first aspect may further include: The terminal sends capability information to the network device, where the capability information indicates whether the terminal supports one column of front-loaded DMRSs and two columns of additional DMRSs, and the front-loaded DMRSs and the additional DMRSs are used to estimate a channel corresponding to the antenna port. For example, if the terminal supports the one column of front-loaded DMRSs and the two columns of additional DMRSs, an antenna port pattern corresponding to the antenna port includes a maximum of two columns of additional DMRSs. For another example, if the terminal does not support the one column of front-loaded DMRSs or the two columns of additional DMRSs, an antenna port pattern corresponding to the antenna port includes a maximum of one column of additional DMRSs. That is, the network device may configure, for the terminal, an antenna port pattern that conforms to a capability of the terminal, to avoid excessively high demodulation overheads of the terminal.

Optionally, the capability information specifically indicates whether the terminal supports the one column of front-loaded DMRSs and the two columns of additional DMRSs when a DMRS port is scheduled by DCI in the DCI format 1_1. It can be learned that the capability information is usually applicable to DCI 1_1, and the capability information is inapplicable to DCI in another format, for example, DCI 1_0, DCI 4_0, or DCI 4_1. To be specific, if the network device schedules downlink transmission by using DCI in another format, the network device does not consider whether the terminal supports the one column of front-loaded DMRSs and the two columns of additional DMRSs. In this case, the network device may determine by default that the terminal supports the one column of front-loaded DMRSs and the two columns of additional DMRSs, or may determine by default that the terminal does not support the one column of front-loaded DMRSs or the two columns of additional DMRSs. This is not limited herein.

In another possible design scheme, the method according to the first aspect may further include: The terminal sends capability information to the network device, where the capability information indicates whether the terminal supports one column of front-loaded DMRSs and two columns of additional DMRSs on a single DMRS port, and the front-loaded DMRSs and the additional DMRSs are used to estimate a channel corresponding to the DMRS port. For example, if the terminal supports the one column of front-loaded DMRSs and the two columns of additional DMRSs on a single DMRS port, an antenna port pattern corresponding to the antenna port includes a maximum of two columns of additional DMRSs. For another example, if the terminal does not support the one column of front-loaded DMRSs or the two columns of additional DMRSs on a single DMRS port, an antenna port pattern corresponding to the antenna port includes a maximum of one column of additional DMRSs. That is, the network device may configure, for the terminal, an antenna port pattern that conforms to a capability of the terminal, to avoid excessively high demodulation overheads of the terminal.

Optionally, the capability information specifically indicates whether the terminal supports the one column of front-loaded DMRSs and the two columns of additional DMRSs when a single DMRS port is scheduled by DCI in the DCI format 1_1. That is, the capability information is usually applicable to a case in which DCI 1_1 and a single antenna port are used. To be specific, if the network device uses the DCI 1_1 to schedule a single antenna port at a time, the network device considers whether the terminal supports the one column of front-loaded DMRSs and the two columns of additional DMRSs. Otherwise, if the network device uses DCI in another format, or DCI schedules a plurality of antenna ports at a time, the network device does not consider whether the terminal supports the one column of front-loaded DMRSs and the two columns of additional DMRSs. In this case, the network device may alternatively determine by default that the terminal supports the one column of front-loaded DMRSs and the two columns of additional DMRSs, or may determine by default that the terminal does not support the one column of front-loaded DMRSs or the two columns of additional DMRSs. This is not limited herein.

According to a second aspect, a demodulation reference signal DMRS-based communication method is provided. The method includes: A network device obtains configuration information, sends the configuration information to a terminal, and sends a DMRS to the terminal on an antenna port based on a DMRS parameter. The configuration information indicates a configuration type of the DMRS. When the configuration type of the DMRS is an enhanced DMRS type, an orthogonal cover code OCC used for mapping the DMRS to a physical resource is a sequence with a length of 2 or 4. When the configuration type of the DMRS is a DMRS type 1 or a DMRS type 2, an OCC used for mapping the DMRS to a physical resource is a sequence with a length of 2. The DMRS parameter includes at least the OCC, and the DMRS parameter is determined based on the configuration information and antenna port information. The antenna port information indicates the antenna port used for downlink information transmission.

In a possible design scheme, the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

In a possible design scheme, when the antenna port is a first antenna port, the value of k' is {0, 1}; or when the antenna port is a second antenna port, the value of k' is {0, 1, 2, 3}. For example, the first antenna port is an antenna port with a port number of 1000, and the second antenna port is an antenna port with a port number greater than 1000.

In a possible design scheme, when the downlink information transmission is scheduled by downlink control information DCI in a first format, the value of k' is {0, 1}; or when the downlink information transmission is scheduled by DCI in a second format, the value of k' is {0, 1, 2, 3}. For example, the first format is a DCI format 1_0, and the second format is a DCI format 1_1.

In a possible design scheme, the method according to the second aspect may further include: The network device sends indication information to the terminal, where the indication information indicates that the value of k' is {0, 1, 2, 3} or {0, 1}.

In a possible design scheme, when no connection is established between the terminal and the network device, the value of k' is {0, 1, 2, 3}.

In a possible design scheme, the method according to the second aspect may further include: The network device receives capability information from the terminal, where the capability information indicates whether the terminal supports one column of front-loaded DMRSs and two columns of additional DMRSs, and the front-loaded DMRSs and the additional DMRSs are used to estimate a channel corresponding to a DMRS port. For example, if the terminal supports the one column of front-loaded DMRSs and the two columns of additional DMRSs, an antenna port pattern corresponding to the antenna port includes a maximum of two columns of additional DMRSs; or if the terminal does not support the one column of front-loaded DMRSs or the two columns of additional DMRSs, an antenna port pattern corresponding to the antenna port includes a maximum of one column of additional DMRSs.

Optionally, the capability information specifically indicates whether the terminal supports the one column of front-loaded DMRSs and the two columns of additional DMRSs when the DMRS port is scheduled by DCI in the DCI format 1_1.

In another possible design scheme, the method according to the second aspect may further include: The network device receives capability information from the terminal, where the capability information indicates whether the terminal supports one column of front-loaded DMRSs and two columns of additional DMRSs on a single DMRS port, and the front-loaded DMRSs and the additional DMRSs are used to estimate a channel corresponding to the DMRS port. For example, if the terminal supports the one column of front-loaded DMRSs and the two columns of additional DMRSs on a single DMRS port, an antenna port pattern corresponding to the antenna port includes a maximum of two columns of additional DMRSs; or if the terminal does not support the one column of front-loaded DMRSs or the two columns of additional DMRSs on a single DMRS port, an antenna port pattern corresponding to the antenna port includes a maximum of one column of additional DMRSs.

Optionally, the capability information specifically indicates whether the terminal supports the one column of front-loaded DMRSs and the two columns of additional DMRSs when a single DMRS port is scheduled by DCI in the DCI format 1_1.

In addition, for technical effects of the method according to the second aspect, refer to the technical effects of the method according to the first aspect. Details are not described herein again.

According to a third aspect, a demodulation reference signal DMRS-based communication method is provided. The method includes: A terminal obtains capability information, and sends the capability information to a network device. The capability information indicates whether the terminal supports an enhanced DMRS type. An orthogonal cover code OCC used for mapping, to a physical resource, a DMRS corresponding to the enhanced DMRS type is a sequence with a length of 4.

It can be learned from the method according to the third aspect that, by learning whether the terminal supports a downlink channel processing capability 2 and the enhanced DMRS type, the network device may enable at most one of the downlink channel processing capability 2 and the enhanced DMRS type for the terminal, to avoid excessively high overheads of the terminal due to a case that both the downlink channel processing capability 2 and the enhanced DMRS type are enabled, and make the terminal more energy-efficient.

In a possible design scheme, the OCC is denoted as $w_f(k')$, and a value of k' being {0, 1, 2, 3} indicates that $w_f(k)'$ is a sequence with a length of 4.

In addition, for technical effects of the method according to the third aspect, refer to the technical effects of the method according to the first aspect. Details are not described herein again.

According to a fourth aspect, a demodulation reference signal DMRS-based communication method is provided. The method includes: A network device obtains a capability of a terminal. When the terminal supports a downlink channel processing capability 2 and an enhanced DMRS type, the network device enables at most one of the downlink channel processing capability 2 and the enhanced DMRS type for the terminal. The capability of the terminal indicates whether the terminal supports the downlink channel processing capability 2 and whether the terminal supports the enhanced DMRS type. An orthogonal cover code OCC used for mapping, to a physical resource, a DMRS corresponding to the enhanced DMRS type is a sequence with a length of 4.

In a possible design scheme, that the network device enables at most one of the downlink channel processing capability 2 and the enhanced DMRS type for the terminal includes: If the network device enables the enhanced DMRS type for the terminal, the network device disables the downlink channel processing capability 2 for the terminal, or the network device determines not to enable the downlink channel processing capability 2 for the terminal. Alternatively, if the network device enables the downlink channel processing capability 2 for the terminal, the network device disables the enhanced DMRS type for the terminal, or the network device determines not to enable the enhanced DMRS type for the terminal.

In a possible design scheme, the downlink channel processing capability 2 is a downlink channel processing capability corresponding to a URLLC service.

In a possible design scheme, the OCC is denoted as $w_f(k')$, and a value of $k'$ being $\{0, 1, 2, 3\}$ indicates that $w_f(k')$ is a sequence with a length of 4.

In addition, for technical effects of the method according to the fourth aspect, refer to the technical effects of the method according to the first aspect. Details are not described herein again.

According to a fifth aspect, a communication apparatus is provided. The apparatus includes a module for performing the method according to the first aspect, for example, a transceiver module and a processing module. The transceiver module is configured to perform a sending function and a receiving function of the apparatus, and the processing module is configured to perform a function of the apparatus other than sending and receiving.

Optionally, the transceiver module may include a sending module and a receiving module. The sending module is configured to implement the sending function of the apparatus according to the fifth aspect, and the receiving module is configured to implement the receiving function of the apparatus according to the fifth aspect.

Optionally, the apparatus according to the fifth aspect may further include a storage module, and the storage module stores a program or instructions. When the processing module executes the program or the instructions, the apparatus is enabled to perform the communication method according to the first aspect.

It should be noted that the apparatus according to the fifth aspect may be a terminal, or may be a (system) or another component or assembly that may be disposed in a terminal, or may be an apparatus including a terminal. This is not limited in this application.

In addition, for technical effects of the apparatus according to the fifth aspect, refer to the technical effects of the method according to the first aspect. Details are not described herein again.

According to a sixth aspect, a communication apparatus is provided. The apparatus includes a module for performing the method according to the second aspect, for example, a transceiver module and a processing module. The transceiver module is configured to perform a sending function and a receiving function of the apparatus, and the processing module is configured to perform a function of the apparatus other than sending and receiving.

Optionally, the transceiver module may include a sending module and a receiving module. The sending module is configured to implement the sending function of the apparatus according to the sixth aspect, and the receiving module is configured to implement the receiving function of the apparatus according to the sixth aspect.

Optionally, the apparatus according to the sixth aspect may further include a storage module, and the storage module stores a program or instructions. When the processing module executes the program or the instructions, the apparatus is enabled to perform the communication method according to the second aspect.

It should be noted that the apparatus according to the sixth aspect may be a network device, or may be a (system) or another component or assembly that may be disposed in a network device, or may be an apparatus including a network device. This is not limited in this application.

In addition, for technical effects of the apparatus according to the sixth aspect, refer to the technical effects of the method according to the second aspect. Details are not described herein again.

According to a seventh aspect, a communication apparatus is provided. The apparatus includes a module for performing the method according to the third aspect, for example, a transceiver module and a processing module. The transceiver module is configured to perform a sending function and a receiving function of the apparatus, and the processing module is configured to perform a function of the apparatus other than sending and receiving.

Optionally, the transceiver module may include a sending module and a receiving module. The sending module is configured to implement the sending function of the apparatus according to the seventh aspect, and the receiving module is configured to implement the receiving function of the apparatus according to the seventh aspect.

Optionally, the apparatus according to the seventh aspect may further include a storage module, and the storage module stores a program or instructions. When the processing module executes the program or the instructions, the apparatus is enabled to perform the communication method according to the third aspect.

It should be noted that the apparatus according to the seventh aspect may be a terminal, or may be a (system) or another component or assembly that may be disposed in a terminal, or may be an apparatus including a terminal. This is not limited in this application.

In addition, for technical effects of the apparatus according to the seventh aspect, refer to the technical effects of the method according to the third aspect. Details are not described herein again.

According to an eighth aspect, a communication apparatus is provided. The apparatus includes a module for performing the method according to the fourth aspect, for example, a transceiver module and a processing module. The transceiver module is configured to perform a sending function and a receiving function of the apparatus, and the processing module is configured to perform a function of the apparatus other than sending and receiving.

Optionally, the transceiver module may include a sending module and a receiving module. The sending module is configured to implement the sending function of the apparatus according to the eighth aspect, and the receiving module is configured to implement the receiving function of the apparatus according to the eighth aspect.

Optionally, the apparatus according to the eighth aspect may further include a storage module, and the storage module stores a program or instructions. When the processing module executes the program or the instructions, the apparatus is enabled to perform the communication method according to the fourth aspect.

It should be noted that the apparatus according to the eighth aspect may be a network device, or may be a (system) or another component or assembly that may be disposed in a network device, or may be an apparatus including a network device. This is not limited in this application.

In addition, for technical effects of the apparatus according to the eighth aspect, refer to the technical effects of the method according to the fourth aspect. Details are not described herein again.

According to a ninth aspect, a communication apparatus is provided. The communication apparatus includes a processor, and the processor is configured to perform the method according to any one of the first aspect to the fourth aspect.

In a possible design scheme, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design scheme, the communication apparatus according to the ninth aspect may further include a memory. The memory and the processor may be integrated together, or may be disposed separately. The memory may be configured to store a computer program and/or data in the method according to any one of the first aspect to the fourth aspect.

In this application, the communication apparatus according to the ninth aspect may be the foregoing terminal or network device, or may be a chip (system) or another component or assembly that may be disposed in the terminal or the network device, or may be an apparatus including the terminal or the network device.

In addition, for technical effects of the communication apparatus according to the ninth aspect, refer to the technical effects of the method according to any one of the first aspect to the fourth aspect. Details are not described herein again.

According to a tenth aspect, a communication apparatus is provided. The communication apparatus includes a processor. The processor is coupled to a memory. The processor is configured to execute a computer program stored in the memory, to enable the communication apparatus to perform the method according to any one of the first aspect to the fourth aspect.

In a possible design scheme, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the foregoing terminal or network device, or may be a chip (system) or another component or assembly that may be disposed in the terminal or the network device, or may be an apparatus including the terminal or the network device.

In addition, for technical effects of the communication apparatus according to the tenth aspect, refer to the technical effects of the method according to any one of the first aspect to the fourth aspect. Details are not described herein again.

According to an eleventh aspect, a communication apparatus is provided, and includes a processor and a memory. The memory is configured to store a computer program. When the processor executes the computer program, the communication apparatus is enabled to perform the method according to any one of the first aspect to the fourth aspect.

In a possible design scheme, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be the foregoing terminal or network device, or may be a chip (system) or another component or assembly that may be disposed in the terminal or the network device, or may be an apparatus including the terminal or the network device.

In addition, for technical effects of the communication apparatus according to the eleventh aspect, refer to the technical effects of the method according to any one of the first aspect to the fourth aspect. Details are not described herein again.

According to a twelfth aspect, a communication apparatus is provided, and includes a processor. The processor is configured to be coupled to a memory, and read a computer program in the memory and then perform, according to the computer program, the method according to any one of the first aspect to the fourth aspect.

In a possible design scheme, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this application, the communication apparatus according to the twelfth aspect may be the foregoing terminal or network device, or may be a chip (system) or another component or assembly that may be disposed in the terminal or the network device, or may be an apparatus including the terminal or the network device.

In addition, for technical effects of the communication apparatus according to the twelfth aspect, refer to the technical effects of the method according to any one of the first aspect to the fourth aspect. Details are not described herein again.

According to a thirteenth aspect, a communication system is provided. The communication system includes the foregoing terminal and the foregoing network device.

According to a fourteenth aspect, a computer-readable storage medium is provided, and includes a computer program or instructions. When the computer program or the instructions are run on a computer, the computer is enabled to perform the method according to any one of the first aspect to the fourth aspect.

According to a fifteenth aspect, a computer program product is provided, and includes a computer program or instructions. When the computer program or the instructions are run on a computer, the computer is enabled to perform the method according to any one of the first aspect to the fourth aspect.

## BRIEF DESCRIPTION OF DRAWINGS

FIG. 1 is a diagram 1 of a structure of a DMRS;
FIG. 2 is a diagram 2 of a structure of a DMRS;
FIG. 3 is a diagram 3 of a structure of a DMRS;
FIG. 4 is a diagram 4 of a structure of a DMRS;
FIG. 5 is a diagram of an architecture of a communication system according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

## DESCRIPTION OF EMBODIMENTS

In a multiple-input multiple-output (multi-input multi-output, MIMO) topic of Release 18 of the 3rd generation partnership project (3GPP Rel-18), an objective of demodulation reference signal (demodulation reference signal, DMRS) enhancement is to increase a quantity of orthogonal DMRS ports to 24 without increasing DMRS overheads. For each DMRS type, both a maximum quantity of orthogonal ports for a single-symbol DMRS and a maximum quantity of orthogonal ports for a double-symbol DMRS are doubled.

In an NR system, based on a manner of mapping a DMRS to a frequency domain resource, there are the following two DMRS types: a type 1 (configuration type 1) DMRS and a type 2 (configuration type 2) DMRS (configured by using a higher-layer parameter dmrs-Type). In embodiments of this application, the DMRS type may also be referred to as a DMRS configuration type.

For the type 1 (configuration type 1) DMRS, in frequency domain, a DMRS sequence is mapped to one subcarrier at an interval of one subcarrier (or a DMRS sequence is mapped to one of every two subcarriers).

For the type 2 (configuration type 2) DMRS, in frequency domain, a DMRS sequence is mapped to two contiguous subcarriers at an interval of four subcarriers (or a DMRS sequence is mapped to two contiguous subcarriers among every six subcarriers).

Based on a quantity of orthogonal frequency division multiplexing (orthogonal frequency division multiplexing, OFDM) symbols occupied by a DMRS sequence on a time domain resource, DMRSs are classified into a single-symbol DMRS and a double-symbol DMRS (determined based on a higher-layer parameter maxLength and/or associated downlink control information (downlink control information, DCI)). Based on locations of DMRSs on time domain resources, the DMRSs are classified into a front-loaded (front-loaded) DMRS and an additional (additional) DMRS. A frequency domain mapping manner and a sequence generation manner of the front-loaded DMRS are completely the same as those of the additional DMRS.

Based on the foregoing classification, a maximum quantity of orthogonal DMRS ports supported in current NR protocol releases (Release-15, Release-16, and Release-17) is shown in Table 1.

Table 1

|  | Type 1 DMRS | Type 2 DMRS |
|---|---|---|
| Single-symbol | 4 | 6 |
| Double-symbol | 8 | 12 |

To be specific, for the single-symbol type 1 DMRS, the maximum quantity of supported orthogonal DMRS ports is 4. For the double-symbol type 1 DMRS, the maximum quantity of supported orthogonal DMRS ports is 8. For the single-symbol type 2 DMRS, the maximum quantity of supported orthogonal DMRS ports is 6. For the double-symbol type 2 DMRS, the maximum quantity of supported orthogonal DMRS ports is 12. In embodiments of this application, a quantity of orthogonal DMRS ports may be understood as a quantity of orthogonal DMRS sequences.

The following specifically describes a mapping manner of each type of DMRS and a method for calculating a maximum quantity of orthogonal DMRS ports.

First, a theoretical basis, namely, a multiplexing technology, for implementing orthogonality between a plurality of DMRS ports is briefly described.

In embodiments of this application, the multiplexing technology may be understood as a technology in which a plurality of signals from a plurality of channels are combined on a transmission path of a transmit end, and the plurality of channels are demultiplexed at a receive end to restore each signal. Channel transmission efficiency can be effectively improved by using the multiplexing technology. For example, by using the multiplexing technology, the plurality of signals may be combined (for example, through a mixer used at a broadcasting and television front-end) at the transmit end for transmission in a dedicated physical channel. Then the receive end separates a combined signal.

The multiplexing technology in embodiments of this application mainly includes frequency division multiplexing (frequency division multiplexing, FDM), time division multiplexing (time division multiplexing, TDM), and code division multiplexing (code division multiplexing, CDM).

For the FDM, a carrier bandwidth is divided into subchannels of different frequency bands, and all users may simultaneously transmit respective signals in different subchannels. Therefore, all the users using the FDM occupy different bandwidth resources at same time.

For the TDM, a channel is divided into different time segments based on time, and all users occupy a same frequency bandwidth at different time.

For the CDM, all users may perform communication on a same frequency band at same time. Because the users use different specially selected code types, no interference occurs between the users. For example, the code division multiplexing may be implemented by using an orthogonal cover code (orthogonal cover code, OCC).

Currently, in a current NR protocol, the FDM, a frequency division orthogonal cover code (frequency division orthogonal cover code, FD-OCC), and a time division orthogonal cover code (time division orthogonal cover code, TD-OCC) are jointly used to multiplex orthogonal DMRS ports. The following separately describes multiplexing of the type 1 DMRS and multiplexing of the type 2 DMRS.

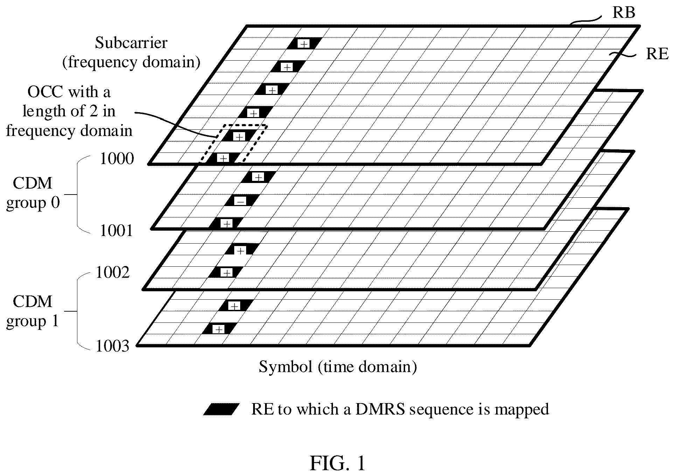

For the single-symbol type 1 DMRS, as shown in FIG. 1, in frequency domain, a DMRS sequence is mapped to one subcarrier at an interval of one subcarrier (or a DMRS sequence is mapped to one of every two subcarriers). In time domain, the DMRS sequence is mapped to one symbol. Therefore, a maximum of two orthogonal DMRS ports can be multiplexed in frequency domain in the FDM mode.

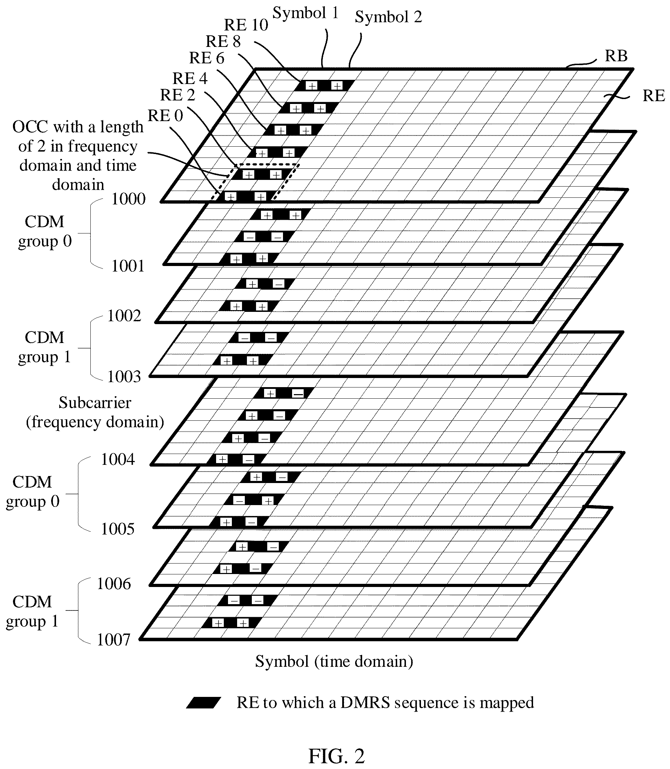

For the double-symbol type 1 DMRS, as shown in FIG. 2, in frequency domain, a DMRS sequence is mapped to one subcarrier at an interval of one subcarrier (or a DMRS sequence is mapped to one of every two subcarriers). In time domain, the DMRS sequence is mapped to two symbols. Therefore, a maximum of four orthogonal DMRS ports can be multiplexed in frequency domain in the FDM mode.

It can be understood that, in embodiments of this application, DMRS sequences mapped to same time and frequency resources belong to a same CDM group (CDM group). In other words, one CDM group indicates one physical resource (time-frequency resource) or one group of physical resources, and different CDM groups correspond to different physical resources.

For example, as shown in FIG. 1, a DMRS sequence mapped to a port 1000 (to be specific, a port number is 1000) and a DMRS sequence mapped to a port 1001 occupy a same time-frequency resource. In other words, the port 1000 (which may also be referred to as a DMRS port 1000) and the port 1001 (which may also be referred to as a DMRS port 1001) belong to a same CDM group: a CDM group 0. Similarly, a port 1002 and a port 1003 belong to a CDM group 1. That is, two CDM groups are supported in this mapping manner.

For another example, as shown in FIG. 2, a port 1000, a port 1001, a port 1004, and a port 1005 belong to a same CDM group: a CDM group 0; and a port 1002, a port 1003, a port 1006, and a port 1007 belong to a same CDM group: a CDM group 1. That is, two CDM groups are supported in this mapping manner.

Because different CDM groups correspond to different frequency domain resources, orthogonal multiplexing of DMRS ports included in different CDM groups may be implemented in the FDM mode. For example, orthogonal multiplexing of the port 1000 and the port 1002, orthogonal multiplexing of the port 1001 and the port 1003, orthogonal multiplexing of the port 1004 and the port 1006, or orthogonal multiplexing of the port 1005 and the port 1007 may be implemented in the FDM mode.

Because a same CDM group corresponds to a same frequency domain resource, among different DMRS ports in a same CDM group (to be specific, in a case in which different DMRS sequences are mapped to a same time-frequency resource), orthogonality between a plurality of ports is implemented in the code division multiplexing mode.

It can be understood that, in embodiments of this application, the DMRS sequence may be a sequence that is not multiplied by a mask, or a sequence that is obtained by multiplying a sequence by a mask.

Specifically, in code domain, the current protocol releases (Release-15, Release-16, and Release-17) support an OCC with a length of 2. Therefore, on a same time-frequency resource, a maximum of two orthogonal DMRS ports can be multiplexed in the code division multiplexing mode.

For example, for the single-symbol type 1 DMRS, as shown in FIG. 1, values of an OCC code sequence that is of the port 1000 and that is mapped to corresponding resource elements (resource element, RE) or subcarriers included in one resource block (resource block, RB) are sequentially {+1, +1, +1, +1, +1, +1}, and values of an OCC that is of the port 1001 and that is mapped to corresponding REs or subcarriers included in one RB are sequentially {+1, -1, +1, -1, +1, -1}. For the port 1000 and the port 1001 in an integer quantity of RBs, DMRS sequences are orthogonal in code domain.

For the double-symbol type 1 DMRS, as shown in FIG. 2, on a same time-frequency resource, a maximum of four orthogonal DMRS ports can be multiplexed through a combination of an FD-OCC and a TD-OCC. For example, for the four ports 1000, 1001, 1002, and 1003 corresponding to the CDM group 0, values of a mask sequence that is of each port and that is mapped to corresponding REs in one RB are shown in Table 2.

Table 2

| | Port 1000 | | Port 1001 | | Port 1002 | | Port 1003 | |
|---|---|---|---|---|---|---|---|---|
| | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 2 | +1 | +1 | -1 | -1 | +1 | -1 | -1 | +1 |
| Subcarrier 4 | +1 | +1 | +1 | +1 | +1 | -1 | +1 | -1 |
| Subcarrier 6 | +1 | +1 | -1 | -1 | +1 | -1 | -1 | +1 |
| Subcarrier 8 | +1 | +1 | +1 | +1 | +1 | -1 | +1 | -1 |
| Subcarrier 10 | +1 | +1 | -1 | -1 | +1 | -1 | -1 | +1 |

It can be understood that the mask sequence shown in Table 2 includes an FD-OCC and a TD-OCC. On a frequency domain resource, a subcarrier corresponds to an FD-OCC sequence value. On a time domain resource, an OFDM symbol corresponds to a TD-OCC sequence value. For example, as shown in Table 2, a DMRS sequence on the port 1000 remains orthogonal to a DMRS sequence on the port 1001 based on the FD-OCC, and the DMRS sequence on the port 1000 remains orthogonal to a DMRS sequence on the port 1004 based on the TD-OCC.

To sum up, for the single-symbol type 1 DMRS, multiplexing of a maximum of four orthogonal ports, that is, the port 1000 to the port 1003, is supported by using the FDM and the FD-OCC. For the double-symbol type 1 DMRS, multiplexing of a maximum of eight orthogonal ports, that is, the port 1000 to the port 1007, is supported by using the FDM, the FD-OCC, and the TD-OCC.

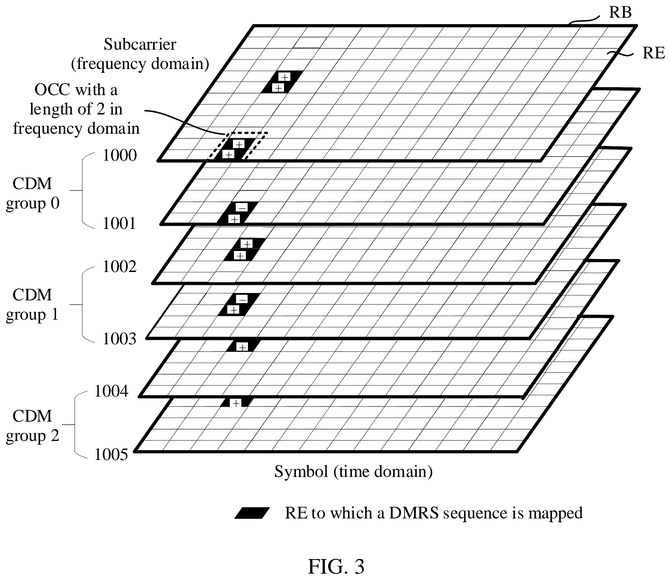

For the single-symbol type 2 DMRS, as shown in FIG. 3, in frequency domain, a DMRS sequence is mapped to two contiguous subcarriers at an interval of four subcarriers (or a DMRS sequence is mapped to two contiguous subcarriers among every six subcarriers). In time domain, the DMRS sequence is mapped to one symbol. In frequency domain, a maximum of three orthogonal DMRS ports can be multiplexed in the FDM mode. That is, three CDM groups are supported. For example, as shown in FIG. 3, a port 1000 and a port 1001 belong to a same CDM group: a CDM group 0; a port 1002 and a port 1003 belong to a same CDM group: a CDM group 1; and a port 1004 and a port 1005 belong to a same CDM group: a CDM group 2. That is, three CDM groups are supported in this mapping manner.

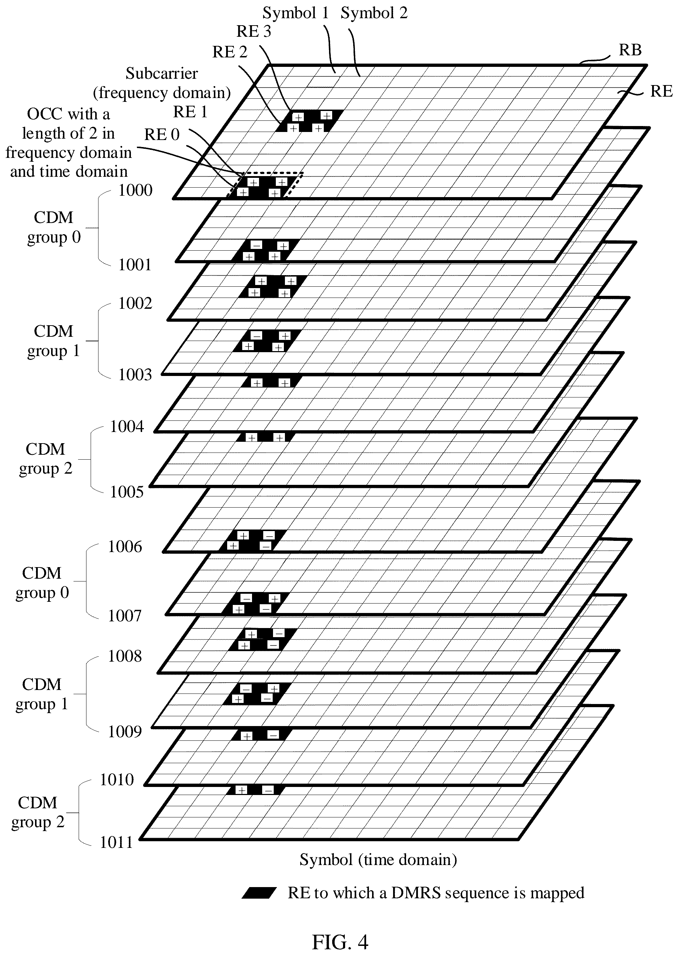

For the double-symbol type 2 DMRS, as shown in FIG. 4, a DMRS sequence is mapped to two contiguous subcarriers at an interval of four subcarriers (or a DMRS sequence is mapped to two contiguous subcarriers among every six subcarriers). In time domain, the DMRS sequence is mapped to two symbols. In frequency domain, a maximum of three orthogonal DMRS ports can also be multiplexed in the FDM mode. That is, three CDM groups are supported. For example, as shown in FIG. 4, a port 1000, a port 1001, a port 1006, and a port 1007 belong to a same CDM group: a CDM group 0; a port 1002, a port 1003, a port 1008, and a port 1009 belong to a same CDM group: a CDM group 1; and a port 1004, a port 1005, a port 1010, and a port 1011 belong to a same CDM group: a CDM group 2. That is, three CDM groups are supported in this mapping manner.

In code domain, the current protocol releases (Release-15, Release-16, and Release-17) support an OCC with a length of 2. Therefore, on a same time-frequency resource, a maximum of two orthogonal DMRS ports can be multiplexed in the code division multiplexing mode.

For example, for the single-symbol type 2 DMRS, as shown in FIG. 3, values of an OCC that is of the port 1000 and that is mapped to corresponding REs or subcarriers included in one RB are sequentially {+1, +1, +1, +1}, and values of an OCC that is of the port 1001 and that is mapped to corresponding REs or subcarriers included in one RB are sequentially {+1, -1, +1, -1}. For the port 1000 and the port 1001 in an integer quantity of RBs, DMRS sequences are orthogonal in code domain.

For the double-symbol type 4 DMRS, as shown in FIG. 4, on a same time-frequency resource, a maximum of four orthogonal DMRS ports can be multiplexed through a combination of an FD-OCC and a TD-OCC. For example, for the four ports 1000, 1001, 1006, and 1007 corresponding to the CDM group 0, a mask sequence that is of each port and that is mapped to corresponding REs in one RB is shown in Table 3.

Table 3

| | Port 1000 | | Port 1001 | | Port 1006 | | Port 1007 | |
|---|---|---|---|---|---|---|---|---|
| | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 1 | +1 | +1 | -1 | +1 | +1 | -1 | -1 | +1 |
| Subcarrier 2 | +1 | +1 | +1 | +1 | +1 | -1 | +1 | -1 |
| Subcarrier 3 | +1 | +1 | -1 | +1 | +1 | -1 | -1 | +1 |

It can be understood that the mask sequence shown in Table 3 includes an FD-OCC and a TD-OCC. On a frequency domain resource, a subcarrier corresponds to an FD-OCC sequence value. On a time domain resource, an OFDM symbol corresponds to a TD-OCC sequence value. For example, as shown in Table 3, a DMRS sequence on the port 1000 remains orthogonal to a DMRS sequence on the port 1001 based on the FD-OCC, and the DMRS sequence on the port 1000 remains orthogonal to a DMRS sequence on the port 1006 based on the TD-OCC.

To sum up, for the single-symbol type 2 DMRS, multiplexing of a maximum of six orthogonal ports, that is, the port 1000 to the port 1005, is supported by using the FDM and the FD-OCC. For the double-symbol type 2 DMRS, multiplexing of a maximum of 12 orthogonal ports, that is, the port 1000 to the port 1011, is supported by using the FDM, the FD-OCC, and the TD-OCC.

The following specifically describes a mapping relationship between a DMRS port and an OCC code.

It is assumed that $r(m)$ represents a DMRS sequence and $\beta_{\mathrm{PDSCH}}^{\mathrm{DMRS}}$ represents a transmit power scale factor. In this case, a mapping from the DMRS sequence to a physical resource, namely, a mapping from the DMRS sequence to a $(k, l)_{p,\mu}$th RE, may satisfy a formula (1):

$$a_{k,l}^{(p,\mu)} = \beta_{\mathrm{PDSCH}}^{\mathrm{DMRS}} w_{\mathrm{f}}\left(k'\right) w_{\mathrm{t}}\left(l'\right) r\left(2n+k'\right) \quad (1)$$

In the formula (1), $a_{k,l}^{(p,\mu)}$ represents a DMRS signal obtained by mapping the DMRS sequence to the $(k, l)_{p,\mu}$th RE, $k$ represents a frequency domain resource index, $l$ represents a time domain resource index, $w_{\mathrm{f}}(k')$ represents a value of an FD-OCC code sequence, namely, a frequency domain mask sequence value, and $w_{\mathrm{t}}(l')$ represents a value of a TD-OCC code sequence, namely, a time domain mask sequence value. A value of $k'$ is 0 or 1. $l = \bar{l} + l'$, and a value of n is 0, 1, 2, ..., in other words, the value of n may be an integer.

$k$ may satisfy a formula (2):

$$k = \begin{cases} 4n + 2k' + \Delta & \text{Type 1} \\ 6n + k' + \Delta & \text{Type 2} \end{cases} \quad (2)$$

In the formula (2), Type 1 represents a type 1 DMRS, and Type 2 represents a type 2 DMRS. $\Delta$ represents a quantity of subcarriers.

For different types of DMRSs, values of the parameters in the formula (1) may be determined based on different tables. In addition, an RE (or a subcarrier) to which a DMRS is mapped needs to be included in a common resource block (common resource block, CRB) allocated for data transmission. For example, an RE to which a downlink DMRS is mapped is included in a CRB allocated for physical downlink shared channel (physical downlink shared channel, PDSCH) transmission. For another example, an RE to which an uplink DMRS is mapped is included in a CRB allocated for physical uplink shared channel (physical uplink shared channel, PUSCH) transmission.

For example, Table 4 shows port mapping parameters of a downlink type 1 DMRS. $p$ represents a number of a downlink DMRS port.

Table 4

| $p$ | Number of a CDM group | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 5 shows port mapping parameters of a downlink type 2 DMRS. $p$ represents a number of a downlink DMRS port.

Table 5

| $p$ | Number of a CDM group | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| $k'=0$ | $k'=1$ | $l'=0$ | $l'=1$ | | | |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

It can be understood that, for a reference point of $k$, if a corresponding physical downlink control channel (physical downlink control channel, PDCCH) is associated with a control resource set (CORESET) 0 and a type 0 PDCCH (Type0-PDCCH) common search space, and corresponds to a system information radio network temporary identifier (system information radio network temporary identifier, SI-RNTI), the reference point of $k$ is a subcarrier 0 of a lowest-numbered resource block in the CORESET 0. Otherwise, the reference point of $k$ is a subcarrier 0 of a CRB 0.

It can be understood that the DMRS sequence is a long sequence generated on an entire carrier bandwidth, and an RE to which a DMRS is mapped is determined based on a CRB allocated for PDSCH transmission.

To increase a quantity of orthogonal DMRS ports, a length of the FD-OCC code may be increased. In an implementation, the length of the FD-OCC code is extended from 2 (namely, FD-OCC-2) to 4 (namely, FD-OCC-4). In this case, a quantity of orthogonal DMRS ports that can be multiplexed in each CDM group is extended from 2 to 4. In this case, a maximum quantity of orthogonal DMRS ports supported by the type 1 DMRS and a maximum quantity of orthogonal DMRS ports supported by the type 2 DMRS are shown in Table 6.

Table 6

|  | Type 1 DMRS | Type 2 DMRS |
|---|---|---|
| Single-symbol | 8 | 12 |
| Double-symbol | 16 | 24 |

Correspondingly, an indication of a DMRS port complies with the following principle: An original port is equivalent to a new port, and DMRS ports in a same CDM group are preferentially allocated to a same terminal device. A mapping relationship between an original DMRS port (to be specific, a DMRS port corresponding to a case in which the length of the FD-OCC code is 2) and the FD-OCC code remains unchanged. On this basis, a new DMRS port is obtained through extension. In this case, for the FD-OCC-4, orthogonality is mainly implemented through a cyclic shift, for example, (+1, +j, -1, -j); or orthogonality may be implemented by using a Hadamard matrix, for example, (+1, -1, +1, -1).

According to a definition in an existing protocol, the DMRS port is scheduled by DCI. For example, for scheduling of DCI in a DCI format 1_0 (DCI format 1_0) (denoted as DCI 1_0), or before a radio resource control (radio resource control, RRC) connection is established, a network device transmits a single-symbol type 1 DMRS on a port 1000 (for the type 1, OCC=2). In this case, a maximum of two columns of single-symbol additional DMRSs are sent, to ensure transmission reliability and robustness, and ensure transmission performance of the DCI 1_0 and transmission performance before an RRC connection is established even in a worst scenario.

However, due to DMRS port enhancement of Rel-18, that is, OCC=4, demodulation performed by a terminal based on OCC=4 is more complex than demodulation performed based on OCC=2, especially in a case of one column of front-loaded DMRSs and two columns of additional DMRSs. Consequently, overheads of the terminal are high, and this is not conducive to energy saving of the terminal. In addition, for a terminal of Rel-18, to be specific, a terminal that supports DMRS port enhancement of Rel-18, when the network device schedules a DMRS by using the DCI 1_0, whether the terminal performs demodulation based on OCC=4 or OCC=2 is unclear. Consequently, the terminal may fail to complete demodulation.

To sum up, for the foregoing technical problems, embodiments of this application provide the following technical solutions. The following describes the technical solutions of this application with reference to the accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system.

In this application, all aspects, embodiments, or features are presented with reference to a system that may include a plurality of devices, components, modules, or the like. It should be appreciated and understood that each system may include another device, component, module, or the like, and/or may not include all of devices, components, modules, or the like that are discussed with reference to the accompanying drawings. In addition, a combination of these solutions may alternatively be used.

In addition, in embodiments of this application, the term "in an example", "for example", or the like is used to give an example, an illustration, or a description. Any embodiment or design scheme described as an "example" in this application should not be construed as being more preferred or advantageous than another embodiment or design scheme. To be precise, the term example is intended to present a concept in a specific manner.

In embodiments of this application, "information (information)", "signal (signal)", "message (message)", "channel (channel)", and "signaling (signaling)" may be sometimes used interchangeably. It should be noted that meanings expressed by the terms match when a difference between the terms is not emphasized. "Of (of)", "relevant (corresponding, relevant)", and "corresponding (corresponding)" may be sometimes used interchangeably. It should be noted that meanings expressed by the terms match when a difference between the terms is not emphasized. In addition, "/" mentioned in this application may indicate an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of the network architecture and emergence of a new service scenario.

It can be further understood that, in embodiments of this application, an OCC mentioned below may be understood as an FD-OCC, unless otherwise specified. In addition, DCI in various formats, such as DCI in a DCI format 1_0, DCI in a DCI format 1_1, DCI in a DCI format 4_0, and DCI in a DCI format 4_1, are denoted as DCI 1_0, DCI 1_1, DCI 4_0, DCI 4_1, and the like below for ease of description.

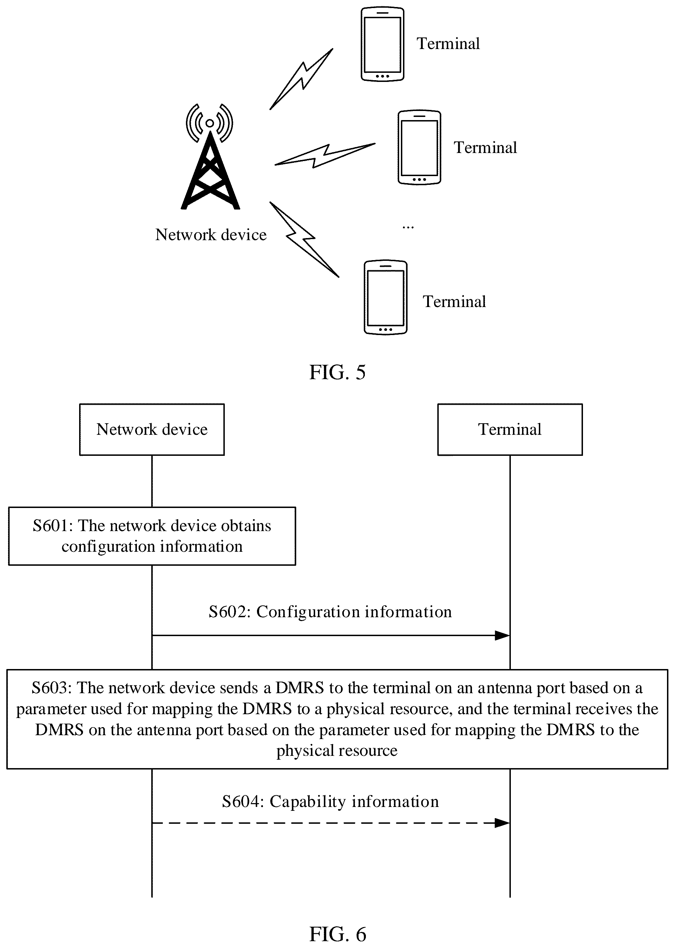

For ease of understanding embodiments of this application, a communication system to which embodiments of this application are applicable is first described in detail by using a communication system shown in FIG. 5 as an example. For example, FIG. 5 is a diagram of an architecture of a communication system to which a communication method according to an embodiment of this application is applicable.

As shown in FIG. 5, the communication system includes a terminal and a network device.

The terminal is a terminal that accesses a network and that has a wireless transceiver function, or a chip or a chip system that may be disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units.

The network device, for example, an access network device, is a device that is located on a network side of the communication system and that has a wireless transceiver function, or a chip or a chip system that may be disposed in the device. The network device may include a next-generation mobile communication system, for example, a 6G access network device, for example, a 6G base station or a 6G core network element. Alternatively, in the next-generation mobile communication system, the network device may be named in another manner. This falls within the protection scope of embodiments of this application. This is not limited in this application. In addition, the network device may alternatively include a gNB in 5G, for example, an NR system, or one antenna panel or a group of antenna panels (including a plurality of antenna panels) of a base station in 5G; or may be a network node that forms a gNB, a transmission point (transmission and reception point, TRP, or transmission point, TP), or a transmission measurement function (transmission measurement function, TMF), for example, a baseband unit (BBU), a CU, a DU, a roadside unit (roadside unit, RSU) with a base station function, or a wired access gateway. In addition, the network device may alternatively include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

In the case of DMRS port enhancement of Rel-18, that is, OCC=4, a communication mechanism, for example, the following communication mechanism 1 and communication mechanism 2, between the terminal and the network device is enhanced in embodiments of this application. Details are described below.

Communication mechanism 1:

Case 1:

Manner (a): For downlink information scheduled in the DCI format 1_0 (or the DCI format 1_0, 4_0, or 4_1, or a DCI format other than the DCI format 1_1), or downlink information scheduled before an RRC connection is established:

Optionally, the terminal receives a DMRS on a DMRS port 1000 based on a DMRS type 1: OCC=2.
Optionally, a specific implementation is implemented by the terminal, and the terminal may receive a DMRS on a DMRS port 1000 based on OCC=2 or OCC=4.
Optionally, the network device may perform sending on a DMRS port 1000 based on OCC=2 or OCC=4.

Manner (b): For downlink information scheduled in the DCI format 1_1 (or a DCI format other than the DCI format 1_0, 4_0, or 4_1, or a DCI format other than the DCI format 1_0):
The terminal receives a DMRS based on OCC=4, an enhanced type 1 (etype1) DMRS, or an enhanced type 2 (etype2) DMRS.

Case 2:

Manner (a): After an RRC connection is established, the network device configures a DMRS of Rel-18, or the network device configures DMRS port enhancement of Rel-18, or the network device configures an enhanced type 1 DMRS or an enhanced type 2 DMRS.
Manner (b): For downlink information scheduled in the DCI format 1_0 (or the DCI format 1_0, 4_0, or 4_1, or a DCI format other than the DCI format 1_1):

Optionally, the terminal receives a DMRS on a DMRS port 1000 based on a DMRS type 1: OCC=2.
Optionally, a specific implementation is implemented by the terminal, and the terminal may receive a DMRS based on OCC=2 or OCC=4.

Manner (c): For downlink information scheduled in the DCI format 1_1 (or a DCI format other than the DCI format 1_0, 4_0, or 4_1, or a DCI format other than the DCI format 1_0):
The terminal receives a DMRS based on OCC=4, an enhanced type 1 (etype1) DMRS, or an enhanced type 2 (etype2) DMRS.
Manner (d): The network device may perform sending on a DMRS port based on OCC=2 or OCC=4.

Case 3:

Manner (a): The terminal reports a capability: whether the terminal supports one column of front-loaded DMRSs and two columns of additional DMRSs in Rel-18 when downlink information is scheduled in the DCI format 1_1 (or DCI other than the DCI format 1_0, 4_0, or 4_1, or a DCI format other than the DCI format 1_0), or whether the terminal supports one column of front-loaded DMRSs and two columns of additional DMRSs in Rel-18 when downlink information is scheduled in the DCI format 1_1 on a single port.
Manner (b): The terminal reports a capability: whether the terminal supports one column of front-loaded DMRSs and two columns of additional DMRSs in Rel-18, or whether the terminal supports one column of front-loaded DMRSs and two columns of additional DMRSs in Rel-18 on a single port (a DCI format is not distinguished).
It can be understood that the case 1 to the case 3 may be separately implemented, or may be implemented in any combination. For example, the case 3 is implemented in combination with the case 1 or the case 2, or the case 1 is implemented in combination with the case 2. A specific manner of combining the cases is not limited in embodiments of this application. In addition, the manners in the foregoing cases may alternatively be implemented selectively or in combination. For example, in the case 1, only the manner (a) may be selectively implemented, or only the manner (b) is selectively implemented, or the manner (a) and the manner (b) are implemented. For another example, in the case 2, only the manner (a) may be selectively implemented, or only the manner (b) is selectively implemented, or only the manner (c) is selectively implemented, or only the manner (d) is selectively implemented, or various combinations of the manner (a) to the manner (d) are implemented. A specific manner of combining the manners is not limited in embodiments of this application. For still another example, in the case 3, only the manner (a) may be selectively implemented, or only the manner (b) is selectively implemented.

Communication mechanism 2:

Case A: Before an RRC connection is established:

Optionally, the terminal assumes that a type 1 DMRS is transmitted on a DMRS port 1000, and the terminal receives the DMRS based on OCC=2.

Optionally, the network device may send a DMRS on a DMRS port 1000 based on OCC=2, or may send a DMRS on a DMRS port 1000 based on OCC=4.

Case B: After an RRC connection is established:

Manner (a): If the network device configures a DMRS of Rel-15, or the network device configures a DMRS port of Rel-15, or the network device configures a type 1 DMRS or a type 2 DMRS, for the DCI format 1_0, 4_0, or 4_1, the terminal assumes that the type 1 DMRS is transmitted on a DMRS port 1000.

Optionally, the terminal receives a DMRS on the DMRS port 1000 based on OCC=2.
Optionally, the network device may send a DMRS on the DMRS port 1000 based on OCC=2, or may send a DMRS on the DMRS port 1000 based on OCC=4.

Manner (b): If the network device configures a DMRS of Rel-18, or the network device configures DMRS port enhancement of Rel-18, or the network device configures an enhanced type 1 DMRS or an enhanced type 2 DMRS, for the DCI format 1_0, 4_0, or 4_1, the terminal assumes that the type 1 DMRS is transmitted on a DMRS port 1000.

Optionally, the UE receives a DMRS on the DMRS port 1000 based on OCC=4.
Optionally, the network device may send a DMRS on the DMRS port 1000 based on OCC=2, or may send a DMRS on the DMRS port 1000 based on OCC=4.

Manner (c): If the network device configures a DMRS of Rel-15, or the network device configures a DMRS port of Rel-15, or the network device configures a type 1 DMRS or a type 2 DMRS, for the DCI format 1_1 (or a DCI format other than the DCI format 1_0, 4_0, or 4_1), the terminal receives a DMRS based on OCC=2.
Manner (d): If the network device configures a DMRS of Rel-18, or the network device configures DMRS port enhancement of Rel-18, or the network device configures an enhanced type 1 DMRS or an enhanced type 2 DMRS, for the DCI format 1_1 (or a DCI format other than the DCI format 1_0, 4_0, or 4_1), the terminal receives a DMRS based on OCC=4.

Case C:

Manner (a): The terminal reports a capability: whether the terminal supports one column of front-loaded DMRSs and two columns of additional DMRSs in Rel-18 when downlink information is scheduled in the DCI format 1_1 (or a DCI format other than the DCI format 1_0, 4_0, or 4_1, or a DCI format other than the DCI format 1_0), or whether the terminal supports one column of front-loaded DMRSs and two columns of additional DMRSs in Rel-18 when the DCI format 1_1 and a single port are used.
Manner (b): The terminal reports a capability: whether the terminal supports one column of front-loaded DMRSs and two columns of additional DMRSs in Rel-18, or whether the terminal supports one column of front-loaded DMRSs and two columns of additional DMRSs in Rel-18 on a single port (a DCI format is not distinguished).

It can be understood that the case A to the case C may be separately implemented, or may be implemented in any combination. For example, the case C is implemented in combination with the case A or the case B, or the case A is implemented in combination with the case B. A specific manner of combining the cases is not limited in embodiments of this application. In addition, the manners in the foregoing cases may alternatively be implemented selectively or in combination. For example, in the case B, only the manner (a) may be selectively implemented, or only the manner (b) is selectively implemented, or only the manner (c) is selectively implemented, or only the manner (d) is selectively implemented, or various combinations of the manner (a) to the manner (d) are implemented, for example, a combination of the manner (a) and the manner (c) is selectively implemented, or a combination of the manner (b) and the manner (d) is selectively implemented. A specific manner of combining the manners is not limited in embodiments of this application. For another example, in the case 3, only the manner (a) may be selectively implemented, or only the manner (b) is selectively implemented.

It can be understood that, unless otherwise specified, a type 1 DMRS port is usually a DMRS port corresponding to OCC=2, and an enhanced type 1 DMRS port or an enhanced type 2 DMRS port is usually a DMRS port corresponding to OCC=2 or OCC=4. OCC=2 may be replaced with the following expression: A value of k' in $w_f(k')$ used for mapping a DMRS to a physical resource is {0, 1}. $w_f(k')$ may be understood as a coding parameter, for example, an OCC, or may be understood as any possible name. This is not limited herein. k' is a variable, and a naming manner of k' is not limited in embodiments of this application. It can be determined, based on the value of k' being {0, 1}, that $w_f(k')$ is a sequence with a length of 2, that is, OCC=2. Similarly, OCC=4 may be replaced with the following expression: A value of k' in $w_f(k')$ used for mapping a DMRS to a physical resource is {0, 1, 2, 3}. In this case, it can be determined, based on the value of k' being {0, 1, 2, 3}, that $w_f(k')$ is a sequence with a length of 4, that is, OCC=4.

It can be further understood that receiving the DMRS (for example, performing receiving on the DMRS port 1000) may alternatively be understood as demodulating the DMRS or estimating a channel corresponding to the DMRS. This is not limited herein.

The following specifically describes, by using method embodiments, communication scenarios to which the foregoing communication mechanisms are applied.

For example, FIG. 6 is a schematic flowchart 1 of a communication method according to an embodiment of this application. The communication method is applicable to communication between the terminal and the network device in the foregoing communication system. As shown in FIG. 6, a process of the communication method is specifically as follows.

S601: The network device obtains configuration information.

The configuration information may indicate a configuration type of a DMRS, for example, an enhanced DMRS type, a DMRS type 1, or a DMRS type 2. The enhanced DMRS type is the foregoing DMRS of Rel-18, or the DMRS port enhancement of Rel-18, or the enhanced type 1 DMRS or the enhanced type 2 DMRS. When the configuration type of the DMRS is the enhanced DMRS type, a value of k' in $w_f(k')$ used for mapping the DMRS to a physical resource is {0, 1, 2, 3} or {0, 1}. To be specific, for the enhanced DMRS type, an OCC may be a sequence with a length of 2 or a sequence with a length of 4. In other words, the configuration information may implicitly indicate that an OCC of 4 or an OCC of 2 needs to be used for receiving when the enhanced DMRS type is used.

It can be understood that, if the configuration type of the DMRS is the DMRS type 1 or the DMRS type 2, the DMRS type 1 or the DMRS type 2 is the foregoing DMRS of Rel-15, or the DMRS port of Rel-15, or the type 1 or the type 2. In this case, a value of k' in $w_f(k')$ used for mapping the DMRS to a physical resource is {0, 1}. To be specific, for the DMRS type 1 or the DMRS type 2, an OCC may be a sequence with a length of 2 by default.

It can be further understood that the network device may obtain the configuration information on any possible occasion, for example, before the terminal accesses the network device or after the terminal accesses the network device. This is not limited in this embodiment of this application.

S602: The network device sends the configuration information to the terminal. The terminal receives the configuration information from the network device.

The configuration information may be carried in any possible signaling, for example, RRC, a medium access control control element (medium access control control element, MAC-CE), or DCI, to reuse existing signaling. Certainly, the configuration information may alternatively be carried in newly defined signaling, to be decoupled from an existing sending/receiving behavior, so that transmission is more flexible.

In a possible manner, the network device may send the configuration information to the terminal after the terminal establishes a connection, for example, an RRC connection or any other possible connection, to the network device. However, this does not constitute a limitation. For example, even if no connection is established between the terminal and the network device, the network device may still send the configuration information, for example, broadcast the configuration information. In this case, the terminal may receive the configuration information through blind detection.

S603: The network device sends a DMRS to the terminal on an antenna port based on a DMRS parameter. The terminal receives the DMRS on the antenna port based on the DMRS parameter.

The DMRS parameter may be a parameter used for mapping the DMRS to a physical resource, or may have another name. This is not limited herein. The DMRS parameter may include at least $w_f(k')$, and the DMRS parameter may be determined based on the configuration information and antenna port information. For example, when downlink information transmission needs to be scheduled, the network device may send DCI to the terminal, where the DCI may carry the antenna port information, to indicate an antenna port used for the scheduled downlink information transmission. In this case, the terminal may determine the DMRS parameter based on the configuration information received in S602 and the antenna port information in the DCI. Therefore, the DMRS on the scheduled antenna port is received and demodulated by using the DMRS parameter, and then the DMRS is used to estimate a channel corresponding to the antenna port.

It can be understood that, because $w_f(k')$ is determined based on the value of k', when determining $w_f(k')$ in the DMRS parameter, the terminal needs to first determine the value of k' in the following several manners, which are separately described below.

Manner 1:

Different values of k' may be determined based on different antenna ports.

For example, when the antenna port is a first antenna port, the value of k' may be {0, 1}, and the first antenna port may be an antenna port with a port number of 1000, that is, an antenna port 1000. Alternatively, when the antenna port is a second antenna port, the value of k' is {0, 1, 2, 3}, and the second antenna port may be an antenna port with a port number greater than 1000, for example, an antenna port 1001, an antenna port 1002, or an antenna port 1003.

It can be understood that, for the DMRS type 1 or the DMRS type 2, a sequence of $w_f(k')$ that has a length of 2 and that corresponds to the antenna port 1000 may be expressed as (+1, +1); and for the enhanced DMRS type, a sequence of $w_f(k')$ that has a length of 4 and that corresponds to the antenna port 1000 may be expressed as (+1, +1, +1, +1). To be specific, the two sequences are orthogonal. Therefore, for the scheduled antenna port 1000, even if the configured enhanced DMRS type indicates that the value of k' may be {0, 1, 2, 3}, the terminal can still normally demodulate the DMRS by using the sequence with a length of 2, and demodulation complexity and overheads can also be reduced. That is, the terminal may determine that the value of k' is {0, 1} based on the antenna port information indicating that the antenna port with a port number of 1000 is scheduled. On the contrary, for the antenna port with a port number greater than 1000, a sequence of $w_f(k')$ that has a length of 2 and that corresponds to the antenna port is not orthogonal to a sequence of $w_f(k')$ that has a length of 4 and that corresponds to the antenna port. Therefore, when the configured enhanced DMRS type indicates that the value of k' may be {0, 1, 2, 3}, the terminal can normally demodulate the DMRS only by using the sequence with a length of 4, to avoid a demodulation failure. That is, the terminal may determine that the value of k' is {0, 1, 2, 3} based on the antenna port information indicating that the antenna port with a port number greater than 1000 is scheduled.

It can be understood that a mechanism in which the terminal determines the value of k' based on an antenna port may be predefined in a protocol, or may be preconfigured. Implementation of obtaining the mechanism by the terminal is not limited in this embodiment of this application.

It can be further understood that there may be a correspondence between the antenna port and the DMRS port mentioned in this embodiment of this application, or the antenna port and the DMRS port may be understood interchangeably. For example, for a DMRS port 0, the sequence number 0 plus 1000 indicates an antenna port corresponding to the DMRS port 0, that is, the antenna port 1000. Similarly, for a DMRS port 1, the sequence number 1 plus 1000 indicates an antenna port corresponding to the DMRS port 1, that is, the antenna port 1001, and so on. Details are not described again. The antenna port may also be referred to as a port. For example, the antenna port 1000 may be referred to as a port 1000, and the antenna port 1001 may also be referred to as a port 1001. Alternatively, the DMRS port mentioned in this embodiment of this application may be equivalently understood as an antenna port corresponding to the DMRS port. For example, a DMRS port 1000 may be equivalently understood as the antenna port 1000, a DMRS port 1001 may be equivalently understood as the antenna port 1001, and so on. Details are not described again.

Manner 2:

Different values of k' may be determined based on DCI in different formats.

For example, when downlink information transmission is scheduled by DCI in a first format, the value of k' may be {0, 1}. The first format is a DCI format 1_0 (or a DCI format 1_0, 4_0, or 4_1, or a DCI format other than a DCI format 1_1). Alternatively, when downlink information transmission is scheduled by DCI in a second format, the value of k' may be {0, 1, 2, 3}. The second format is the DCI format 1_1 (or downlink DCI other than DCI 1_0, 4_0, or 4_1).

It can be understood that, because an antenna port scheduled by the DCI in the first format is usually the antenna port 1000, as described above, even if the configured enhanced DMRS type indicates that the value of k' may be {0, 1, 2, 3}, the terminal can still normally demodulate the DMRS by using the sequence with a length of 2, and demodulation complexity and overheads can also be reduced. That is, the terminal may determine that the value of k' is {0, 1} based on a format of received DCI being the first format. On the contrary, because an antenna port scheduled by the DCI in the second format may be the antenna port with a port number greater than 1000, as described above, when the configured enhanced DMRS type indicates that the value of k' may be {0, 1, 2, 3}, the terminal can normally demodulate the DMRS only by using the sequence with a length of 4, to avoid a demodulation failure. That is, the terminal may determine that the value of k' is {0, 1, 2, 3} based on a format of received DCI being the second format.

It can be understood that a mechanism in which the terminal determines the value of k' based on a DCI format may be predefined in a protocol, or may be preconfigured. Implementation of obtaining the mechanism by the terminal is not limited in this embodiment of this application either.

Manner 3:

Different values of k' may be indicated by a network side.

For example, the network device may send indication information to the terminal, and correspondingly, the terminal may receive the indication information from the network device. The indication information may indicate that the value of k' is {0, 1, 2, 3} or {0, 1}. For example, the indication information may be a 1-bit (bit) information element, and may indicate, by using values 0 and 1, that the value of k' is {0, 1, 2, 3} or {0, 1}.

In addition, the manner 1 to the manner 3 may alternatively be combined in an embodiment. For example, the manner 1 is combined with the manner 2. In this case, the terminal needs to determine the value of k' based on both an antenna port and a DCI format.

It can be understood that the indication information may be carried in any possible signaling, for example, RRC, a MAC-CE, or DCI, to reuse existing signaling. Certainly, the indication information may alternatively be carried in newly defined signaling, to be decoupled from an existing sending/receiving behavior, so that transmission is more flexible. In addition, the network device may alternatively send the indication information to the terminal on any possible occasion, for example, after an RRC connection is initially established or an RRC connection is reconfigured. This is not limited.

To sum up, the network device may configure the terminal to use the enhanced DMRS type, so that the terminal can receive the DMRS by using an OCC corresponding to the enhanced DMRS type, where the OCC is, for example, a sequence with a length of 2 or 4, to avoid a receiving failure due to a case that the terminal does not know whether to use an OCC corresponding to the enhanced DMRS type or an OCC corresponding to the DMRS type 1 or the DMRS type 2, and ensure that the terminal can successfully receive the DMRS.

It can be understood that the foregoing method is described by using downlink transmission as an example. In practice, the foregoing method is also applicable to uplink transmission. For example, the terminal may send a DMRS on an antenna port based on a DMRS parameter. Correspondingly, the network device may receive the DMRS on the antenna port based on the DMRS parameter. In addition, a specific implementation principle of the uplink transmission is similar to that of the downlink transmission. For understanding, refer to the downlink transmission. Details are not described herein again.

In a possible design scheme, with reference to S601 to S603, when no connection is established between the terminal and the network device, the value of k' is {0, 1, 2, 3}. To be specific, for the terminal, before S601, even if the terminal does not know whether the network side configures the enhanced DMRS type or configures the DMRS type 1 or the DMRS type 2, the terminal can still determine $w_f(k')$ by assuming, by default, that the value of k' is {0, 1, 2, 3}. Similarly, for the network device, before S601, the network device may also determine $w_f(k')$ by assuming, by default, that the value of k' is {0, 1, 2, 3}, and use the antenna port 1000 broadcast by $w_f(k')$.

It can be understood that determining, by the terminal, $w_f(k')$ by assuming, by default, that the value of k' is {0, 1, 2, 3} may depend on that the terminal is an upgraded terminal, to be specific, the terminal supports the enhanced DMRS type. If the terminal is a non-upgraded terminal, to be specific, the terminal supports the DMRS type 1 or the DMRS type 2, but does not support the enhanced DMRS type, the terminal may alternatively determine $w_f(k')$ by assuming, by default, that the value of k' is {0, 1}.

In a possible design scheme, with reference to S601 to S603, the method further includes the following step.

S604: The terminal sends capability information to the network device, and the network device receives the capability information from the terminal.

In a first possible manner, the capability information may indicate whether the terminal supports one column of front-loaded DMRSs and two columns of additional DMRSs.

The capability information may be a 1-bit information element, and may indicate, by using values 0 and 1, whether the terminal supports the one column of front-loaded DMRSs and the two columns of additional DMRSs. The front-loaded DMRSs and the additional DMRSs may be configured on a corresponding antenna port, to estimate a channel corresponding to the antenna port. The channel corresponding to the antenna port may be a channel in a multiplexing technology. To be specific, orthogonal antenna ports are combined to implement transmission in a dedicated physical channel, and the physical channel may be referred to as a channel corresponding to the antenna ports.

In this case, if the terminal supports the one column of front-loaded DMRSs and the two columns of additional DMRSs, an antenna port pattern corresponding to the antenna port includes a maximum of two columns of additional DMRSs. To be specific, when downlink transmission is scheduled by the DCI, the DCI carries an antenna port pattern of an antenna port scheduled by the DCI, and the antenna port pattern may be an antenna port pattern including one column of front-loaded DMRSs and a maximum of two columns of additional DMRSs. To be specific, the antenna port pattern may be any one of the following: an antenna port pattern with one column of front-loaded DMRSs, an antenna port pattern with one column of front-loaded DMRSs and one column of additional DMRSs, or an antenna port pattern with one column of front-loaded DMRSs and two columns of additional DMRSs. That is, the network device may configure, for the terminal, an antenna port pattern that conforms to a capability of the terminal, to avoid excessively high demodulation overheads of the terminal.

Alternatively, if the terminal does not support the one column of front-loaded DMRSs or the two columns of additional DMRSs, an antenna port pattern corresponding to the antenna port includes a maximum of one column of additional DMRSs. To be specific, when downlink transmission is scheduled by the DCI, the DCI carries an antenna port pattern of an antenna port scheduled by the DCI, and the antenna port pattern may be an antenna port pattern including one column of front-loaded DMRSs and a maximum of one column of additional DMRSs. To be specific, the antenna port pattern may be any one of the following: an antenna port pattern with one column of front-loaded DMRSs, or an antenna port pattern with one column of front-loaded DMRSs and one column of additional DMRSs. That is, the network device may configure, for the terminal, an antenna port pattern that conforms to a capability of the terminal, to avoid excessively high demodulation overheads of the terminal.

It can be understood that the first possible manner is applicable to DCI in all formats, and is also applicable to various scheduling manners of the DCI, for example, scheduling a single antenna port at a time, or scheduling a plurality of antenna ports at a time. It can be understood that, in the first possible manner, whether the terminal supports the one column of front-loaded DMRSs and the two columns of additional DMRSs is directly reported, without reporting a capability separately for a single port and for a plurality of ports, so that signaling overheads can be reduced.

In a second possible manner, the capability information may indicate whether the terminal supports one column of front-loaded DMRSs and two columns of additional DMRSs when downlink information is scheduled in the DCI format 1_1.

Similarly, if the terminal supports the one column of front-loaded DMRSs and the two columns of additional DMRSs, an antenna port pattern corresponding to the antenna port includes a maximum of two columns of additional DMRSs; or if the terminal does not support the one column of front-loaded DMRSs or the two columns of additional DMRSs, an antenna port pattern corresponding to the antenna port includes a maximum of one column of additional DMRSs. For details, refer to the foregoing related descriptions. Details are not described herein again.

It can be understood that a difference between the second possible manner and the first possible manner lies in: The second possible manner is usually applicable to the DCI format 1_1, or a downlink DCI format other than the DCI format 1_0, the DCI format 4_0, or the DCI format 4_1. The second possible manner is inapplicable to DCI in other formats, for example, the DCI format 1_0, the DCI format 4_0, or the DCI format 4_1. To be specific, if the network device schedules downlink transmission by using DCI in other formats, the network device does not consider whether the terminal supports the one column of front-loaded DMRSs and the two columns of additional DMRSs. In this case, the network device may determine by default that the terminal supports the one column of front-loaded DMRSs and the two columns of additional DMRSs, or may determine by default that the terminal does not support the one column of front-loaded DMRSs or the two columns of additional DMRSs. This is not limited herein.

In a third possible manner, the capability information indicates whether the terminal supports one column of front-loaded DMRSs and two columns of additional DMRSs on a single DMRS port.

Similarly, if the terminal supports the one column of front-loaded DMRSs and the two columns of additional DMRSs on a single DMRS port, an antenna port pattern corresponding to the antenna port includes a maximum of two columns of additional DMRSs; or if the terminal does not support the one column of front-loaded DMRSs or the two columns of additional DMRSs on a single DMRS port, an antenna port pattern corresponding to the antenna port includes a maximum of one column of additional DMRSs. For details, refer to the foregoing related descriptions. Details are not described herein again.

It can be understood that a difference between the third possible manner and the first possible manner lies in: The third possible manner is usually applicable to a case in which a single antenna port is used. To be specific, if DCI schedules a single antenna port at a time, the network device considers whether the terminal supports the one column of front-loaded DMRSs and the two columns of additional DMRSs. Otherwise, if DCI schedules a plurality of antenna ports at a time, the network device does not consider whether the terminal supports the one column of front-loaded DMRSs and the two columns of additional DMRSs.

In a fourth possible manner, the capability information may indicate whether the terminal supports one column of front-loaded DMRSs and two columns of additional DMRSs when downlink information is scheduled in the DCI format 1_1 on a single DMRS port.

Similarly, if the terminal supports the one column of front-loaded DMRSs and the two columns of additional DMRSs when the downlink information is scheduled in the DCI format 1_1 on a single DMRS port, an antenna port pattern corresponding to the antenna port includes a maximum of two columns of additional DMRSs; or if the terminal does not support the one column of front-loaded DMRSs or the two columns of additional DMRSs when a single DMRS port is scheduled by DCI in the DCI format 1_1, an antenna port pattern corresponding to the antenna port includes a maximum of one column of additional DMRSs. For details, refer to the foregoing related descriptions. Details are not described herein again.

It can be understood that a difference between the fourth possible manner and the first possible manner lies in: The fourth possible manner is usually applicable to a case in which DCI 1_1 and a single antenna port are used. To be specific, if the network device schedules downlink information on a single port by using the DCI 1_1, the network device considers whether the terminal supports the one column of front-loaded DMRSs and the two columns of additional DMRSs. Otherwise, if the network device schedules downlink information by using DCI in another format or on a plurality of antenna ports, the network device does not consider whether the terminal supports the one column of front-loaded DMRSs and the two columns of additional DMRSs.

It can be understood that the terminal may send the capability information to the network device on any possible occasion, for example, after an RRC connection is initially established or after an RRC connection is reconfigured. This is not specifically limited. In addition, an execution sequence of S604 and S601 to S603 is not limited. For example, S604 may be performed before S601, after S603, or on any occasion between S601 and S603.

It can be further understood that the method shown in FIG. 6 is merely an optional example, and is not construed as a limitation. For example, S604 may be decoupled from S601 to S603. To be specific, S604 is separately implemented. For another example, when the configuration information indicates the DMRS type 1 and the DMRS type 2, the terminal may still perform receiving on a DMRS port by using an OCC of 4.

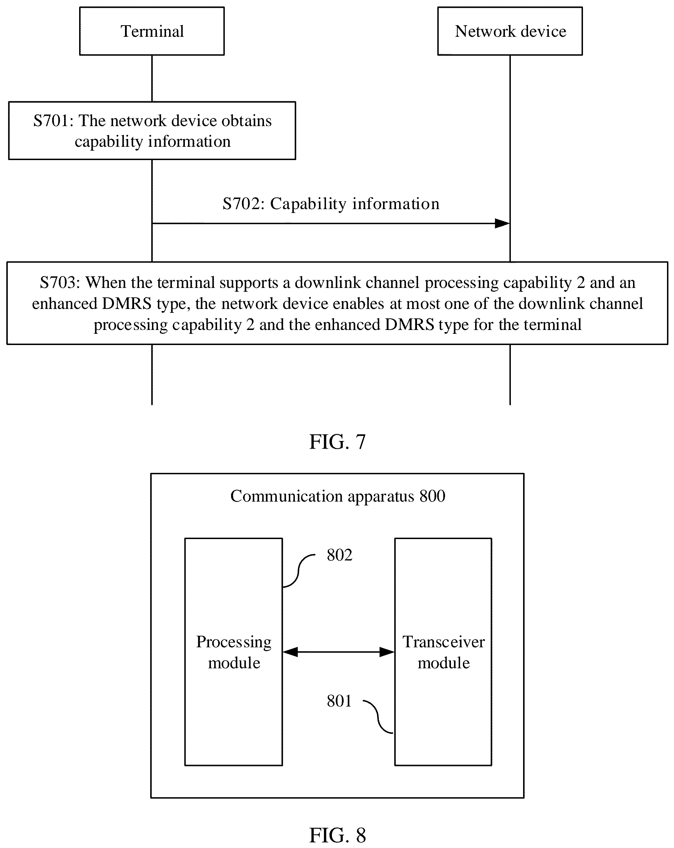

For example, FIG. 7 is a schematic flowchart 2 of a communication method according to an embodiment of this application. The communication method is applicable to communication between the terminal and the network device in the foregoing communication system. As shown in FIG. 7, a process of the communication method is specifically as follows.

S701: The terminal obtains capability information.

The capability information indicates whether the terminal supports an enhanced DMRS type. An OCC used for mapping, to a physical resource, a DMRS corresponding to the enhanced DMRS type is a sequence with a length of 4. To be specific, a value of k' in $w_f(k')$ is {0, 1, 2, 3}. For details, refer to related descriptions of FIG. 6. Details are not described herein again.

S702: The terminal sends the capability information to the network device, and correspondingly, the network device obtains a capability of the terminal.

The capability of the terminal may be understood as the capability information. The capability information may be carried in any possible signaling, for example, RRC or a MAC-CE, to reuse existing signaling. Certainly, the capability information may alternatively be carried in newly defined signaling, to be decoupled from an existing sending/receiving behavior, so that transmission is more flexible.

The terminal may send the capability information to the network device on any possible occasion, for example, after an RRC connection is initially established or after an RRC connection is reconfigured. This is not specifically limited.

S703: When the terminal supports a downlink channel processing capability 2 and the enhanced DMRS type, the network device enables at most one of the downlink channel processing capability 2 and the enhanced DMRS type for the terminal.

The downlink channel processing capability 2 may be a downlink channel processing capability corresponding to a URLLC service, and may be specifically a physical downlink shared channel (physical downlink shared channel, PDSCH) processing capability 2 (PDSCH processing capability 2). Whether the terminal supports the downlink channel processing capability 2 may be obtained by the network device from the terminal, or may be locally preconfigured by the network device. This is not limited herein.

On this basis, if the network device enables the enhanced DMRS type for the terminal, for example, sends, to the terminal, an information element corresponding to a DMRS of Rel-18, where the information element is configured as successful (true) to enable the enhanced DMRS type, the network device disables the downlink channel processing capability 2 for the terminal, or the network device determines not to enable the downlink channel processing capability 2 for the terminal. To be specific, if the network device has pre-enabled the downlink channel processing capability 2 for the terminal, the network device needs to disable the downlink channel processing capability 2 for the terminal. For example, the network device sends a processing type 2 enabled (processingType2Enabled) information element to the terminal, where the information element is configured as false/failed (false) to disable the downlink channel processing capability 2. Alternatively, if the network device has not pre-enabled the downlink channel processing capability 2 for the terminal, the network device determines that the downlink channel processing capability 2 does not need to be enabled for the terminal.

Alternatively, if the network device enables the downlink channel processing capability 2 for the terminal, for example, the network device sends a processing type 2 enabled (processingType2Enabled) information element to the terminal, where the information element is configured as successful (true) to enable the downlink channel processing capability 2, the network device disables the enhanced DMRS type for the terminal, or the network device determines not to enable the enhanced DMRS type for the terminal. To be specific, if the network device has pre-enabled the enhanced DMRS type for the terminal, the network device needs to disable the enhanced DMRS type for the terminal. For example, the network device sends, to the terminal, an information element corresponding to a DMRS of Rel-18, where the information element is configured as false/failed (false) to disable the enhanced DMRS type. Alternatively, if the network device has not pre-enabled the enhanced DMRS type for the terminal, the network device determines that the enhanced DMRS type does not need to be enabled for the terminal.

To sum up, by learning whether the terminal supports the downlink channel processing capability 2 and the enhanced DMRS type, the network device may enable at most one of the downlink channel processing capability 2 and the enhanced DMRS type for the terminal, to avoid excessively high overheads of the terminal due to a case that both the downlink channel processing capability 2 and the enhanced DMRS type are enabled, and make the terminal more energy-efficient.

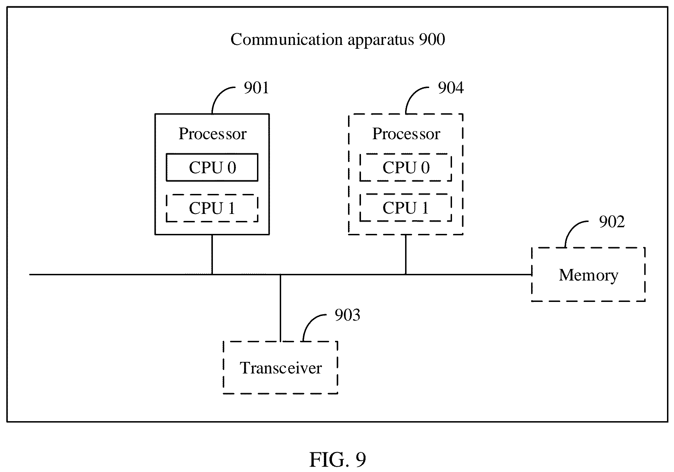

The communication method provided in embodiments of this application is described above in detail with reference to FIG. 6 and FIG. 7. An apparatus for performing the communication method provided in embodiments of this application is described below in detail with reference to FIG. 8 and FIG. 9.

For example, FIG. 8 is a diagram of a structure of a communication apparatus according to an embodiment of this application. As shown in FIG. 8, the communication apparatus 800 is applicable to the communication system shown in FIG. 5, and includes modules for performing the method shown in FIG. 6 or FIG. 7, for example, a transceiver module 801 and a processing module 802. For ease of description, FIG. 8 shows only main components of the communication apparatus.

In some embodiments, the communication apparatus 800 may perform the functions of the terminal shown in FIG. 6.

The transceiver module 801 is configured to receive configuration information from a network device. The processing module 802 is configured to control, based on a DMRS parameter, the transceiver module 801 to receive a DMRS on an antenna port. The configuration information indicates a configuration type of the DMRS. When the configuration type of the DMRS is an enhanced DMRS type, an orthogonal cover code OCC used for mapping the DMRS to a physical resource is a sequence with a length of 2 or 4. When the configuration type of the DMRS is a DMRS type 1 or a DMRS type 2, an OCC used for mapping the DMRS to a physical resource is a sequence with a length of 2. The DMRS parameter includes at least the OCC, and the DMRS parameter is determined based on the configuration information and antenna port information. The antenna port information indicates the antenna port used for downlink information transmission.

In a possible design scheme, the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

In a possible design scheme, when the antenna port is a first antenna port, the value of k' is {0, 1}; or when the antenna port is a second antenna port, the value of k' is {0, 1, 2, 3}. For example, the first antenna port is an antenna port with a port number of 1000, and the second antenna port is an antenna port with a port number greater than 1000.

In a possible design scheme, when the downlink information transmission is scheduled by downlink control information DCI in a first format, the value of k' is {0, 1}; or when the downlink information transmission is scheduled by DCI in a second format, the value of k' is {0, 1, 2, 3}. For example, the first format is a DCI format 1_0, and the second format is a DCI format 1_1.

In a possible design scheme, the transceiver module 801 is further configured to receive indication information from the network device, where the indication information indicates that the value of k' is {0, 1, 2, 3} or {0, 1}.

In a possible design scheme, when no connection is established between the communication apparatus 800 and the network device, the value of k' is {0, 1, 2, 3}.

In a possible design scheme, the transceiver module 801 is further configured to send capability information to the network device, where the capability information indicates whether the communication apparatus 800 supports one column of front-loaded DMRSs and two columns of additional DMRSs, and the front-loaded DMRSs and the additional DMRSs are used to estimate a channel corresponding to the antenna port. For example, if the communication apparatus 800 supports the one column of front-loaded DMRSs and the two columns of additional DMRSs, an antenna port pattern corresponding to the antenna port includes a maximum of two columns of additional DMRSs. For another example, if the communication apparatus 800 does not support the one column of front-loaded DMRSs or the two columns of additional DMRSs, an antenna port pattern corresponding to the antenna port includes a maximum of one column of additional DMRSs.

Optionally, the capability information specifically indicates whether the communication apparatus 800 supports the one column of front-loaded DMRSs and the two columns of additional DMRSs when the DMRS port is scheduled by DCI in the DCI format 1_1.

In another possible design scheme, the transceiver module 801 is further configured to send capability information to the network device, where the capability information indicates whether the communication apparatus 800 supports one column of front-loaded DMRSs and two columns of additional DMRSs on a single DMRS port, and the front-loaded DMRSs and the additional DMRSs are used to estimate a channel corresponding to the DMRS port. For example, if the communication apparatus 800 supports the one column of front-loaded DMRSs and the two columns of additional DMRSs on a single DMRS port, an antenna port pattern corresponding to the antenna port includes a maximum of two columns of additional DMRSs. For another example, if the communication apparatus 800 does not support the one column of front-loaded DMRSs or the two columns of additional DMRSs on a single DMRS port, an antenna port pattern corresponding to the antenna port includes a maximum of one column of additional DMRSs.

Optionally, the capability information specifically indicates whether the communication apparatus 800 supports the one column of front-loaded DMRSs and the two columns of additional DMRSs when a single DMRS port is scheduled by DCI in the DCI format 1_1.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 is enabled to perform the functions of the terminal in the communication method shown in FIG. 6.

It can be understood that the communication apparatus 800 may be a terminal, or may be a chip (system) or another component or assembly that may be disposed in a terminal, or may be an apparatus including a terminal. This is not limited in this application.

In addition, for technical effects of the communication apparatus 800, refer to the technical effects of the communication method shown in FIG. 6. Details are not described herein again.

In some other embodiments, the communication apparatus 800 may perform the functions of the network device shown in FIG. 6.

The processing module 802 is configured to obtain configuration information. The transceiver module 801 is configured to send the configuration information to a terminal. The processing module 802 is further configured to control, based on a DMRS parameter, the transceiver module 801 to send a DMRS to the terminal on an antenna port. The configuration information indicates a configuration type of the DMRS. When the configuration type of the DMRS is an enhanced DMRS type, an orthogonal cover code OCC used for mapping the DMRS to a physical resource is a sequence with a length of 2 or 4. When the configuration type of the DMRS is a DMRS type 1 or a DMRS type 2, an OCC used for mapping the DMRS to a physical resource is a sequence with a length of 2. The DMRS parameter includes at least the OCC, and the DMRS parameter is determined based on the configuration information and antenna port information. The antenna port information indicates the antenna port used for downlink information transmission.

In a possible design scheme, the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

In a possible design scheme, when the antenna port is a first antenna port, the value of k' is {0, 1}; or when the antenna port is a second antenna port, the value of k' is {0, 1, 2, 3}. For example, the first antenna port is an antenna port with a port number of 1000, and the second antenna port is an antenna port with a port number greater than 1000.

In a possible design scheme, when the downlink information transmission is scheduled by downlink control information DCI in a first format, the value of k' is {0, 1}; or when the downlink information transmission is scheduled by DCI in a second format, the value of k' is {0, 1, 2, 3}. For example, the first format is a DCI format 1_0, and the second format is a DCI format 1_1.

In a possible design scheme, the transceiver module 801 is further configured to send indication information to the terminal, where the indication information indicates that the value of k' is {0, 1, 2, 3} or {0, 1}.

In a possible design scheme, when no connection is established between the terminal and the communication apparatus 800, the value of k' is {0, 1, 2, 3}.

In a possible design scheme, the transceiver module 801 is further configured to receive capability information from the terminal, where the capability information indicates whether the terminal supports one column of front-loaded DMRSs and two columns of additional DMRSs, and the front-loaded DMRSs and the additional DMRSs are used to estimate a channel corresponding to a DMRS port. For example, if the terminal supports the one column of front-loaded DMRSs and the two columns of additional DMRSs, an antenna port pattern corresponding to the antenna port includes a maximum of two columns of additional DMRSs; or if the terminal does not support the one column of front-loaded DMRSs or the two columns of additional DMRSs, an antenna port pattern corresponding to the antenna port includes a maximum of one column of additional DMRSs.

Optionally, the capability information specifically indicates whether the terminal supports the one column of front-loaded DMRSs and the two columns of additional DMRSs when the DMRS port is scheduled by DCI in the DCI format 1_1.

In another possible design scheme, the transceiver module 801 is further configured to receive capability information from the terminal, where the capability information indicates whether the terminal supports one column of front-loaded DMRSs and two columns of additional DMRSs on a single DMRS port, and the front-loaded DMRSs and the additional DMRSs are used to estimate a channel corresponding to the DMRS port. For example, if the terminal supports the one column of front-loaded DMRSs and the two columns of additional DMRSs on a single DMRS port, an antenna port pattern corresponding to the antenna port includes a maximum of two columns of additional DMRSs; or if the terminal does not support the one column of front-loaded DMRSs or the two columns of additional DMRSs on a single DMRS port, an antenna port pattern corresponding to the antenna port includes a maximum of one column of additional DMRSs.

Optionally, the capability information specifically indicates whether the terminal supports the one column of front-loaded DMRSs and the two columns of additional DMRSs when a single DMRS port is scheduled by DCI in the DCI format 1_1.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 is enabled to perform the functions of the network device in the communication method shown in FIG. 6.

It can be understood that the communication apparatus 800 may be a network device, or may be a chip (system) or another component or assembly that may be disposed in a network device, or may be an apparatus including a network device. This is not limited in this application.

In addition, for technical effects of the communication apparatus 800, refer to the technical effects of the communication method shown in FIG. 6. Details are not described herein again.

In still some other embodiments, the communication apparatus 800 may perform the functions of the terminal shown in FIG. 7.

The processing module 802 is configured to obtain capability information, and the transceiver module 801 is configured to send the capability information to a network device. The capability information indicates whether the communication apparatus 800 supports an enhanced DMRS type. An orthogonal cover code OCC used for mapping, to a physical resource, a DMRS corresponding to the enhanced DMRS type is a sequence with a length of 4.

In a possible design scheme, the OCC is denoted as $w_f(k')$, and a value of k' being {0, 1, 2, 3} indicates that $w_f(k)'$ is a sequence with a length of 4.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 is enabled to perform the functions of the terminal in the communication method shown in FIG. 7.

It can be understood that the communication apparatus 800 may be a terminal, or may be a chip (system) or another component or assembly that may be disposed in a terminal, or may be an apparatus including a terminal. This is not limited in this application.

In addition, for technical effects of the communication apparatus 800, refer to the technical effects of the communication method shown in FIG. 7. Details are not described herein again.

In yet some other embodiments, the communication apparatus 800 may perform the functions of the network device shown in FIG. 7.

The processing module 802 is configured to obtain a capability of a terminal. The processing module 802 is further configured to: when the terminal supports a downlink channel processing capability 2 and an enhanced DMRS type, control the transceiver module 801 to enable at most one of the downlink channel processing capability 2 and the enhanced DMRS type for the terminal. The capability of the terminal indicates whether the terminal supports the downlink channel processing capability 2 and whether the terminal supports the enhanced DMRS type. An orthogonal cover code OCC used for mapping, to a physical resource, a DMRS corresponding to the enhanced DMRS type is a sequence with a length of 4.

In a possible design scheme, if the processing module 802 controls the transceiver module 801 to enable the enhanced DMRS type for the terminal, the processing module 802 controls the transceiver module 801 to disable the downlink channel processing capability 2 for the terminal, or the processing module 802 determines not to enable the downlink channel processing capability 2 for the terminal. Alternatively, if the processing module 802 controls the transceiver module 801 to enable the downlink channel processing capability 2 for the terminal, the processing module 802 controls the transceiver module 801 to disable the enhanced DMRS type for the terminal, or the processing module 802 determines not to enable the enhanced DMRS type for the terminal.

In a possible design scheme, the downlink channel processing capability 2 is a downlink channel processing capability corresponding to a URLLC service.

In a possible design scheme, the OCC is denoted as $w_f(k')$, and a value of k' being {0, 1, 2, 3} indicates that $w_f(k')$ is a sequence with a length of 4.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 is enabled to perform the functions of the network device in the communication method shown in FIG. 7.

It can be understood that the communication apparatus 800 may be a network device, or may be a chip (system) or another component or assembly that may be disposed in a network device, or may be an apparatus including a network device. This is not limited in this application.

In addition, for technical effects of the communication apparatus 800, refer to the technical effects of the communication method shown in FIG. 7. Details are not described herein again.

For example, FIG. 9 is a diagram 2 of a structure of a communication apparatus according to an embodiment of this application. The communication apparatus may be a terminal, or may be a chip (system) or another component or assembly that may be disposed in a terminal. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes the components of the communication apparatus 900 in detail with reference to FIG. 9.

The processor 901 is a control center of the communication apparatus 900, and may be one processor, or may be a collective term for a plurality of processing elements. For example, the processor 901 is one or more central processing units (central processing unit, CPU), or may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 901 may perform various functions of the communication apparatus 900, for example, perform the communication method shown in FIG. 6 or FIG. 7, by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU) or a multi-core processor (multi-CPU). The processor herein may be one or more devices, circuits, and/or processing cores for processing data (for example, computer program instructions).

The memory 902 is configured to store a software program for performing the solutions in this application, and the processor 901 controls execution. For a specific implementation, refer to the foregoing method embodiments. Details are not described herein again.

Optionally, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or data structures and that is accessible to a computer, but is not limited thereto. The memory 902 may be integrated with the processor 901; or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal, and the transceiver 903 may be configured to communicate with a network device or communicate with another terminal device. For another example, the communication apparatus 900 is a network device, and the transceiver 903 may be configured to communicate with a terminal or communicate with another network device.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901; or may exist independently, and is coupled to the processor 901 through an interface circuit (not shown in FIG. 9) of the communication apparatus 900. This is not specifically limited in this embodiment of this application.

It can be understood that the structure of the communication apparatus 900 shown in FIG. 9 does not constitute a limitation on the communication apparatus. An actual communication apparatus may include more or fewer components than those shown in the figure, or some components may be combined, or the components may be arranged differently.

In addition, for technical effects of the communication apparatus 900, refer to the technical effects of the communication method in the foregoing method embodiments. Details are not described herein again.

It should be understood that the processor in embodiments of this application may be a central processing unit (central processing unit, CPU); or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It can be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When the embodiments are implemented by software, all or some of the embodiments may be implemented in a form of a computer program product. The computer program product includes one or more computer instructions or computer programs. When the program instructions or the computer programs are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, for example, a server or a data center, including one or more usable medium sets. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists, where A and B may be in a singular form or a plural form. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

It should be understood that sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A demodulation reference signal DMRS-based communication method, wherein the method comprises:

   receiving, by a terminal, configuration information from a network device, wherein the configuration information indicates a configuration type of a DMRS, and when the configuration type of the DMRS is an enhanced DMRS type, an orthogonal cover code OCC used for mapping the DMRS to a physical resource is a sequence with a length of 2 or 4, or when the configuration type of the DMRS is a DMRS type 1 or a DMRS type 2, an OCC used for mapping the DMRS to a physical resource is a sequence with a length of 2; and

   receiving, by the terminal, the DMRS on an antenna port based on a DMRS parameter, wherein the DMRS parameter comprises at least the OCC, the DMRS parameter is determined based on the configuration information and antenna port information, and the antenna port information indicates the antenna port used for downlink information transmission.

2. The method according to claim 1, wherein the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

3. The method according to claim 2, wherein

   when the antenna port is a first antenna port, the value of k' is {0, 1}; or
   when the antenna port is a second antenna port, the value of k' is {0, 1, 2, 3}.

4. The method according to claim 3, wherein the first antenna port is an antenna port with a port number of 1000, and the second antenna port is an antenna port with a port number greater than 1000.

5. The method according to claim 2, wherein

   when the downlink information transmission is scheduled by downlink control information DCI in a first format, the value of k' is {0, 1}; or
   when the downlink information transmission is scheduled by DCI in a second format, the value of k' is {0, 1, 2, 3}.

6. The method according to claim 5, wherein the first format is a DCI format 1_0, and the second format is a DCI format 1_1.

7. The method according to claim 2, wherein the method further comprises:
   receiving, by the terminal, indication information from the network device, wherein the indication information indicates that the value of k' is {0, 1, 2, 3} or {0, 1}.

8. The method according to any one of claims 2 to 7, wherein
   when no connection is established between the terminal and the network device, the value of k' is {0, 1, 2, 3}.

9. The method according to any one of claims 1 to 8, wherein the method further comprises:
   sending, by the terminal, capability information to the network device, wherein the capability information indicates whether the terminal supports one column of front-loaded DMRSs and two columns of additional DMRSs, and the front-loaded DMRSs and the additional DMRSs are used to estimate a channel corresponding to the antenna port.

10. The method according to claim 9, wherein the capability information specifically indicates whether the terminal supports the one column of front-loaded DMRSs and the two columns of additional DMRSs when the DMRS port is scheduled by DCI in the DCI format 1_1.

11. A demodulation reference signal DMRS-based communication method, wherein the method comprises:

    obtaining, by a network device, configuration information, wherein the configuration information indicates a configuration type of a DMRS, and when the configuration type of the DMRS is an enhanced DMRS type, an orthogonal cover code OCC used for mapping the DMRS to a physical resource is a sequence with a length of 2 or 4, or when the configuration type of the DMRS is a DMRS type 1 or a DMRS type 2, an OCC used for mapping the DMRS to a physical resource is a sequence with a length of 2;
    sending, by the network device, the configuration information to a terminal; and
    sending, by the network device, the DMRS to the terminal on an antenna port based on the DMRS parameter, wherein the DMRS parameter comprises at least the OCC, the DMRS parameter is determined based on the configuration information and antenna port information, and the antenna port information indicates the antenna port used for downlink information transmission.

12. The method according to claim 11, wherein the OCC is denoted as $w_f(k')$, and a value of k' being {0, 1} indicates that $w_f(k')$ is a sequence with a length of 2, or a value of k' being {0, 1, 2, 3} indicates that $w_f(k')$ is a sequence with a length of 4.

13. The method according to claim 12, wherein

    when the antenna port is a first antenna port, the value of k' is {0, 1}; or
    when the antenna port is a second antenna port, the value of k' is {0, 1, 2, 3}.

14. The method according to claim 13, wherein the first antenna port is an antenna port with a port number of 1000, and the second antenna port is an antenna port with a port number greater than 1000.

15. The method according to claim 12, wherein

    when the downlink information transmission is scheduled by downlink control information DCI in a first format, the value of k' is {0, 1}; or
    when the downlink information transmission is scheduled by DCI in a second format, the value of k' is {0, 1, 2, 3}.

16. The method according to claim 15, wherein the first format is a DCI format 1_0, and the second format is a DCI format 1_1.

17. The method according to claim 12, wherein the method further comprises:
    sending, by the network device, indication information to the terminal, wherein the indication information indicates that the value of k' is {0, 1, 2, 3} or {0, 1}.

18. The method according to any one of claims 12 to 17, wherein
    when no connection is established between the terminal and the network device, the value of k' is {0, 1, 2, 3}.

19. The method according to any one of claims 11 to 18, wherein the method further comprises:
    receiving, by the network device, capability information from the terminal, wherein the capability information indicates whether the terminal supports one column of front-loaded DMRSs and two columns of additional DMRSs, and the front-loaded DMRSs and the additional DMRSs are used to estimate a channel corresponding to the DMRS port.

20. The method according to claim 19, wherein the capability information specifically indicates whether the terminal supports the one column of front-loaded DMRSs and the two columns of additional DMRSs when the DMRS port is scheduled by DCI in the DCI format 1_1.

21. A communication apparatus, wherein the apparatus comprises a module for performing the method according to any one of claims 1 to 20.

22. A communication apparatus, wherein the communication apparatus comprises a processor and a memory, the memory is configured to store computer instructions, and when the processor executes the instructions, the communication apparatus is enabled to perform the method according to any one of claims 1 to 20.

23. A computer-readable storage medium, wherein the computer-readable storage medium comprises a computer program or instructions, and when the computer program or the instructions are run on a computer, the computer is enabled to perform the method according to any one of claims 1 to 20.

RE to which a DMRS sequence is mapped

FIG. 1

FIG. 2

RE to which a DMRS sequence is mapped

FIG. 3

RE to which a DMRS sequence is mapped

FIG. 4

FIG. 5

S601: The network device obtains configuration information

S602: Configuration information

S603: The network device sends a DMRS to the terminal on an antenna port based on a parameter used for mapping the DMRS to a physical resource, and the terminal receives the DMRS on the antenna port based on the parameter used for mapping the DMRS to the physical resource

S604: Capability information

FIG. 6

Terminal

Network device

S701: The network device obtains capability information

S702: Capability information

S703: When the terminal supports a downlink channel processing capability 2 and an enhanced DMRS type, the network device enables at most one of the downlink channel processing capability 2 and the enhanced DMRS type for the terminal

FIG. 7

Communication apparatus 800

Processing module

802

Transceiver module

801

FIG. 8

Communication apparatus 900

901

Processor

CPU 0

CPU 1

904

Processor

CPU 0

CPU 1

902

Memory

903

Transceiver

FIG. 9

## INTERNATIONAL SEARCH REPORT

| International application No. |
| --- |
| **PCT/CN2024/095013** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, 3GPP: 1型, 2型, 长度, 加强, 解调参考信号, 类型1, 类型2, 增强, 正交覆盖码, dmrs, length, occ, type, enhancement

**C.    DOCUMENTS CONSIDERED TO BE RELEVANT**

| Category* | Citation of document, with indication, where appropriate, of the relevant passages | Relevant to claim No. |
| --- | --- | --- |
| A | CN 107431682 A (QUALCOMM INC.) 01 December 2017 (2017-12-01) description, paragraph [0076] | 1-23 |
| A | CN 106455066 A (ALCATEL-LUCENT SHANGHAI BELL CO., LTD. et al.) 22 February 2017 (2017-02-22) entire document | 1-23 |
| A | CN 112970283 A (SHARP CORP.) 15 June 2021 (2021-06-15) entire document | 1-23 |
| A | WO 2022031544 A1 (INTEL CORP.) 10 February 2022 (2022-02-10) entire document | 1-23 |

☐ Further documents are listed in the continuation of Box C.          ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **13 August 2024** | **21 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095013**

| Patent document cited in search report | | | Publication date (day/month/year) | Patent family member(s) | | | Publication date (day/month/year) |
|---|---|---|---|---|---|---|---|
| CN | 107431682 | A | 01 December 2017 | JP | 6755875 | B2 | 16 September 2020 |
| | | | | EP | 3257210 | A1 | 20 December 2017 |
| | | | | EP | 3257210 | A4 | 29 August 2018 |
| | | | | WO | 2016127939 | A1 | 18 August 2016 |
| | | | | KR | 20170117051 | A | 20 October 2017 |
| | | | | US | 2018026684 | A1 | 25 January 2018 |
| | | | | US | 11677448 | B2 | 13 June 2023 |
| | | | | BR | 112017017154 | A2 | 03 April 2018 |
| CN | 106455066 | A | 22 February 2017 | EP | 3335362 | A1 | 20 June 2018 |
| | | | | EP | 3335362 | B1 | 09 December 2020 |
| | | | | US | 2018234221 | A1 | 16 August 2018 |
| | | | | US | 10547423 | B2 | 28 January 2020 |
| | | | | WO | 2017025805 | A1 | 16 February 2017 |
| CN | 112970283 | A | 15 June 2021 | US | 2022006581 | A1 | 06 January 2022 |
| | | | | WO | 2020090621 | A1 | 07 May 2020 |
| | | | | JP | 2021106422 | A | 26 July 2021 |
| | | | | JP | 6933785 | B2 | 08 September 2021 |
| | | | | JP | 2020072371 | A | 07 May 2020 |
| | | | | EP | 3876596 | A1 | 08 September 2021 |
| | | | | EP | 3876596 | A4 | 03 August 2022 |
| WO | 2022031544 | A1 | 10 February 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310613789